# EUROPEAN PATENT APPLICATION

(11) **EP 2 461 397 A1**
(43) Date of publication of application: **06.06.2012**
(21) Application number: 10804591.5
(22) Date of filing: 29.07.2010
(51) Int. Cl.: H01M 4/38, H01M 4/36, H01M 4/587, H01G 9/058

(54) **ELECTRODE ACTIVE MATERIAL, ELECTRODE, AND ELECTRICITY STORAGE DEVICE**

(30) Priority: 31.07.2009 JP 2009180185
(71) Applicant: Dow Corning Toray Co., Ltd., Tokyo 100-0005 (JP)
(72) Inventor: HARIMOTO, Yukinari, Ichihara-shi Chiba 299-0108 (JP); FUKUI, Hiroshi, Ichihara-shi Chiba 299-0108 (JP); HINO, Takakazu, Ichihara-shi Chiba 299-0108 (JP); OSUKA, Hisashi, Ichihara-shi Chiba 299-0108 (JP)
(74) Representative: Thomson, Craig Richard
(86) International application number: PCT/JP2010/063232
(87) International publication number: WO 2011/013851

(57) **Abstract**

This invention relates to an electrode active material, an electrode containing the active material, and an electricity storage device including the electrode. The electrode active material comprises a silicon-containing carbon-based composite material obtained by preparing a uniform phase comprising at least (A) a crosslinkable composition that includes a silicon-containing compound having a crosslinkable group, and (B) a liquid or melt that does not participate in the crosslinking reaction of the crosslinkable composition; then crosslinking the component (A), causing phase-separation from the component (B) for obtaining silicon-containing crosslinked particles or a dispersion wherein the silicon-containing crosslinked particles are dispersed in the component (B); and then baking the silicon-containing crosslinked particles or the dispersion in an inert gas or in a vacuum at 300 to 1,500°C. The electrode active material is particularly suitable as an electrode of a lithium secondary battery, displays high reversible capacity and stable charge and discharge cycle characteristics, and is **characterized by** having little electrical potential loss when lithium is discharged.

## Description

### TECHNICAL FIELD

The present invention relates to an electrode active material, an electrode containing the active material, and an electricity storage device including the electrode.

### BACKGROUND ART

Electricity storage devices and particularly lithium secondary batteries are being investigated as a type of high energy density secondary battery. In many cases, a silicon-containing carbon material obtained by pyrolyzing a silicon polymer is used as a negative electrode material of such lithium secondary batteries. For example, Japanese Unexamined Patent Application Publication H10-97853 and Solid State Ionics, 122, 71 (1999) describe fabricating an electrode usable in the manufacturing of a battery having a large capacity, low irreversible capacity, high density, and excellent safety behavior by using a polysilane and a coal tar pitch as precursors. Additionally, Japanese Unexamined Patent Application Publication H10-74506, Japanese Unexamined Patent Application Publication 2004-273377, and J. Electrochem. Soc., 144, 2410 (1997) describe obtaining a battery having a large capacity, low irreversible capacity, high density, and excellent safety behavior by pyrolyzing a siloxane polymer and, thereafter, introducing lithium in order to form an electrode for a lithium secondary battery.

However, such lithium secondary batteries that comprise an electrode including a silicon-containing carbon material have a problem in that practical performance is insufficient with regards to charge and discharge cycle characteristics and the like.

### Prior Art Documents

### Patent Documents

Patent Document 1: Japanese Unexamined Patent Application Publication H10-97853
Patent Document 2: Japanese Unexamined Patent Application Publication H10-74506
Patent Document 3: Japanese Unexamined Patent Application Publication 2004-273377

### Non-Patent Documents

Non-Patent Document 1: Solid State Ionics, 122, 71 (1999)
Non-Patent Document 2: J. Electrochem. Soc., 144, 2410 (1997)

### DISCLOSURE OF THE INVENTION

An obj ect of the present invention is to provide an electrode active material, an electrode containing the active material, and an electricity storage device including the electrode suitable for use as an electrode of an electricity storage device, particularly for a lithium secondary battery.

The electrode active material of the present invention is characterized by comprising a silicon-containing carbon-based composite material obtained by preparing a uniform phase comprising at least (A) a crosslinkable composition that includes a silicon-containing compound having a crosslinkable group, and (B) a liquid or melt that does not participate in the crosslinking reaction of the crosslinkable composition; then crosslinking the component (A), causing phase-separation from the component (B) for obtaining silicon-containing crosslinked particles or a dispersion wherein the silicon-containing crosslinked particles are dispersed in the component (B); and then baking the silicon-containing crosslinked particles or the dispersion in an inert gas or in a vacuum at 300 to 1,500°C.

The electrode of the present invention is characterized by comprising the electrode active material, and the electricity storage device of the present invention is characterized by comprising the electrode.

The electrode active material of the present invention has high reversible capacity and stable charge and discharge cycle characteristics, has little electrical potential loss when lithium is discharged, and furthermore, uses inexpensive raw materials, and can be manufactured via a simple manufacturing process. Therefore, the electrode active material of the present invention is suitable for an electrode of an electricity storage device and particularly for a lithium secondary battery. The electrode of the present invention imparts high reversible capacity and stable charge and discharge cycle characteristics to the battery. The electricity storage device of the present invention has high reversible capacity and stable charge and discharge cycle characteristics.

### Brief Description of the Drawings

FIG. 1 illustrates a lithium secondary battery that is an example of the electricity storage device of the present invention.
FIG. 2 illustrates a lithium secondary battery that is another example of the electricity storage device of the present invention.
FIG. 3 shows charge and discharge cycle characteristics of the lithium secondary battery of Practical Example 1.
FIG. 4 shows charge and discharge cycle characteristics of the lithium secondary battery of Practical Example 11.

### Reference Numerals

1: Molecular sieve, 2: Positive electrode, 3: Negative electrode, 4: Separator, 5: Polypropylene plate, 6: Polypropylene filler, 7: Electrolyte solution, 8: Current collector, 9: Case, 10: Insulating packing, 11: Positive electrode, 12: Separator, 13: Negative electrode, 14: Current collector

### DETAILED DESCRIPTION OF THE INVENTION

### Electrode Active Material

The electrode active material of the present invention is characterized by comprising a silicon-containing carbon-based composite material obtained by preparing a uniform phase comprising at least (A) a crosslinkable composition that includes a silicon-containing compound having a crosslinkable group, and (B) a liquid or melt that does not participate in the crosslinking reaction of the crosslinkable composition; then crosslinking the component (A), causing phase-separation from the component (B) for obtaining silicon-containing crosslinked particles or a dispersion wherein the silicon-containing crosslinked particles are dispersed in the component (B); and then baking the silicon-containing crosslinked particles or the dispersion in an inert gas or in a vacuum at 300 to 1,500°C.

Specifically, the electrode active material of the present invention is characterized by comprising a silicon-containing carbon-based composite material manufactured via a method including the following steps i) to iii).
i) Preparing a uniform phase comprising at least (A) a crosslinkable composition that includes a silicon-containing compound having a crosslinkable group, and (B) a liquid or melt that does not participate in the crosslinking reaction of the crosslinkable composition;
ii) Crosslinking the component (A) in the uniform phase obtained in step i), causing phase-separation from the component (B) for obtaining silicon-containing crosslinked particles; and
iii) Baking the silicon-containing crosslinked particles or a dispersion wherein the silicon-containing crosslinked particles are dispersed in the component (B) obtained in step ii) in an inert gas or in a vacuum at 300 to 1,500°C to obtain the silicon-containing carbon-based composite material.

The crosslinkable composition of the component (A) comprises a silicon-containing compound having a crosslinkable group, and is a composition that is crosslinked by a crosslinking reaction of said silicon-containing compound. Such a crosslinkable composition is preferably crosslinked via a crosslinking reaction such as: an addition reaction such as a hydrosilylation reaction, Michael addition reaction, Diels-Alder reaction, or the like; a condensation reaction such as a dealcoholization, dehydrogenation, dewatering, deamination, or the like; a ring-opening reaction such as epoxy ring-opening, ester ring-opening, or the like; or a radical reaction initiated by a peroxide, UV, or the like.

The component (A) is preferably a crosslinkable composition comprising the silicon-containing compound having a crosslinkable group, a crosslinking agent, and, as necessary, a crosslinking reaction catalyst or a radical reaction initiator.

The silicon-containing compound having a crosslinkable group is a main component of the component (A), and preferably has greater than or equal to one addition reactive, condensation reactive, ring-opening reactive, or radical reactive group per ten silicon atoms in the molecule. Examples of the addition reactive group include alkenyl groups, hydrogen atoms, and mercapto group-containing organic groups. Examples of the condensation reactive group include a hydrogen atoms, halogen atoms, amino group-containing organic groups, alkoxy groups, and hydroxy groups. Examples of the ring-opening reactive group include epoxy group-containing organic groups. Furthermore, examples of the radical reactive group include alkenyl groups and acryl group- or methacryl group-containing organic groups.

Examples of the silicon-containing compound include siloxanes, silanes, silazanes, carbosilanes, and copolymers and mixtures thereof. Specific examples include monomers, oligomers, or polymers having Si-O-Si bonds, and similar siloxanes; monomers, oligomers, or polymers having silane and Si-Si bonds, and similar silanes; monomers, oligomers, or polymers having Si-(CH₂)ₙ-Si bonds, and similar silalkylenes; monomers, oligomers, or polymers having Si-(C₆H₄)ₙ-Si bonds, and similar silarylenes; monomers, oligomers, or polymers having Si-N-Si bonds, and similar silazanes; silicon-containing compounds having at least two types of bonds selected from Si-O-Si bonds, Si-Si bonds, Si-(CH₂)ₙ-Si bonds, Si-(C₆H₄)ₙ-Si bonds, and Si-N-Si bonds; and copolymers and mixtures thereof. Note that in the formula, n is an integer greater than or equal to 1.

The forms of the aforementioned siloxanes, silanes, silazanes, carbosilanes, and copolymers and mixtures thereof are not particularly limited, and at room temperature, these compounds may be in a solid, liquid, or a paste-like form.

The siloxanes are expressed by the following average unit formula:

(R¹₃SiO_{1/2})ₐ(R¹₂SiO_{2/2})_{b}(R¹SiO_{3/2})_{c}(SiO_{4/2})_{d}

In this formula R¹ are the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; "a", "b", "c", and "d" are numbers that are greater than or equal to 0 and less than or equal to 1, and that satisfy a + b + c+ d = 1; however, "a", "b", and "c" cannot be 0 at the same time.

Examples of the monovalent hydrocarbon groups represented by R¹ include alkyl groups, alkenyl groups, aralkyl groups, and aryl groups. The alkyl groups are preferably alkyl groups having 1 to 12 carbon atoms and more preferably alkyl groups having 1 to 6 carbon atoms. Alkyl groups are preferably any of the following: straight or branched chain alkyl groups, cycloalkyl groups, or cycloalkylene groups (alkyl groups that combine straight or branched chain alkylene groups (preferably methylene groups, ethylene groups, or similar alkylene groups having 1 to 6 carbon atoms) with carbon rings (preferably rings having 3 to 8 carbon atoms)). The straight or branched chain alkyl groups preferably have 1 to 6 carbon atoms and examples thereof include methyl groups, ethyl groups, n-propyl groups, isopropyl groups, butyl groups, t-butyl groups, pentyl groups, and hexyl groups. The cycloalkyl groups preferably have 4 to 6 carbon atoms and examples thereof include cyclobutyl groups, cyclopentyl groups, and cyclohexyl groups. The alkenyl groups preferably have 2 to 12 carbon atoms, and more preferably 2 to 6 carbon atoms. Examples of the alkenyl group with 2 to 6 carbon atoms include vinyl groups, propenyl groups, butenyl groups, pentenyl groups, and hexenyl groups, of which the vinyl groups are preferable. The aralkyl groups preferably have 7 to 12 carbon atoms. Examples of the aralkyl groups with 7 to 12 carbon atoms include benzyl groups, phenethyl groups, and phenylpropyl groups. The aryl groups preferably have 6 to 12 carbon atoms and examples thereof include phenyl groups, naphthyl groups, and tolyl groups. The monovalent hydrocarbon groups may have substituents. Examples of such substituents include fluorine atoms, chlorine atoms, bromine atoms, iodine atoms, or other halogens; hydroxyl groups; methoxy groups, ethoxy groups, n-propoxy groups, isopropoxy groups, or similar alkoxy groups. Examples of such substituted monovalent hydrocarbon groups include 3-chloropropyl groups, 3,3,3-trifluoropropyl groups, perfluorobutylethyl groups, and perfluorooctylethyl groups.

Examples of the halogen atoms represented by R¹ include fluorine atoms, chlorine atoms, bromine atoms, and iodine atoms, of which chlorine atoms are preferable.

Examples of the epoxy group-containing organic groups represented by R¹ include 3-glycidoxypropyl groups, 4-glycidoxybutyl groups, or similar glycidoxyalkyl groups; 2-(2,3-epoxycyclohexyl)-ethyl groups, 3-(2,3-epoxycyclohexyl)-propyl groups, or similar epoxycyclohexylalkyl groups; 4-oxiranylbutyl groups, 8-oxiranyloctyl groups, or similar oxiranylalkyl groups. Glycidoxyalkyl groups are preferable and 3-glycidoxypropyl groups are particularly preferable.

Examples of the acryl group- or methacryl group-containing organic groups represented by R¹ include 3-acryloxypropyl groups, 3-methacryloxypropyl groups, 4-acryloxybutyl groups, and 4-methacryloxybutyl groups, of which 3-methacryloxypropyl groups are preferable.

Examples of the amino group-containing organic groups represented by R¹ include 3-aminopropyl groups, 4-aminobutyl groups, and N-(2-aminoethyl)-3-aminopropyl groups, of which 3-aminopropyl groups and N-(2-aminoethyl)-3-aminopropyl groups are preferable.

Examples of the mercapto group-containing organic groups represented by R¹ include 3-mercaptopropyl groups and 4-mercaptobutyl groups.

Examples of the alkoxy groups represented by R¹ include methoxy groups, ethoxy groups, n-propoxy groups, and isopropoxy groups, of which methoxy groups and ethoxy groups are preferable.

At least two groups represented by R¹ in one molecule are the following: alkenyl groups, hydrogen atoms, halogen atoms, epoxy group-containing organic groups, acryl group- or methacryl group-containing organic groups, amino group-containing organic groups, mercapto group-containing organic groups, alkoxy groups, or hydroxy groups.

Furthermore, "a", "b", "c", and "d" are numbers that are greater than or equal to 0 and are less than or equal to 1 and satisfy a + b + c + d = 1. However, "a", "b", and "c" cannot be equal to 0 altogether at the same time.

The siloxanes described above should be structured from at least one of the structural units expressed by the following: (R¹₃SiO_{1/2}), (R¹₂SiO_{2/2}), (R¹SiO_{3/2}), and (SiO_{4/2}). Examples thereof include a straight chain polysiloxane consisting of (R¹₃SiO_{1/2}) and (R¹₂SiO_{2/2}) units; a cyclic polysiloxane consisting of (R¹₂SiO_{2/2}) units; a branched chain polysiloxane consisting of (R¹SiO_{3/2}) or (SiO_{4/2}) units; a polysiloxane consisting of (R¹₃SiO_{1/2}) and (R¹SiO_{3/2}) units; a polysiloxane consisting of (R¹₃SiO_{1/2}) and (SiO_{4/2}) units; a polysiloxane consisting of (R¹SiO_{3/2}) and (SiO_{4/2}) units; a polysiloxane consisting of (R¹₂SiO_{2/2}) and (R¹SiO_{3/2}) units; a polysiloxane consisting of (R¹₂SiO_{2/2}) and (SiO_{4/2}) units; a polysiloxane consisting of (R¹₃SiO_{1/2}), (R¹₂SiO_{2/2}), and (R¹SiO_{3/2}) units; a polysiloxane consisting of (R¹₃SiO_{1/2}), (R¹₂SiO_{2/2}), and (SiO_{4/2}) units; a polysiloxane consisting of (R¹₃SiO_{1/2}), (R¹SiO_{3/2}), and (SiO_{4/2}) units; a polysiloxane consisting of (R¹₂SiO_{2/2}), (R¹SiO_{3/2}), and (SiO_{4/2}) units; and a polysiloxane consisting of (R¹₃SiO_{1/2}), (R¹₂SiO_{2/2}), (R¹SiO_{3/2}), and (SiO_{4/2}) units. The number of repetitions of the structural units expressed by (R¹₃SiO_{1/2}), (R¹₂SiO_{2/2}), (R¹SiO_{3/2}), and (SiO_{4/2}) is preferably 1 to 10,000, more preferably 1 to 1,000, and even more preferably 3 to 500.

The siloxanes described above can be prepared by methods known in the art. The method for preparing these siloxanes is not particularly limited, but the most general methods include hydrolysis of organochlorosilanes. These and other methods are disclosed by Noll in, Chemistry and Technology of Silicones, Chapter 5 (Translated 2nd German Issue, Academic Press, 1968).

The siloxanes described above may be copolymers. For example, the following copolymers can be used: a copolymer having Si-O-Si and Si-Si bonds; a copolymer having Si-O-Si and Si-N-Si bonds; a copolymer having Si-O-Si and Si-(CH₂)ₙ-Si bonds; a copolymer having Si-O-Si and Si-(C₆H₄)ₙ-Si bonds, or similar siloxanes. In the formulae, "n" has the same meaning as defined above.

Furthermore, the silanes can be expressed by the following general formula:

R¹₄Si,

or by the following average unit formula:

(R¹₃Si)ₐ(R¹₂Si)_{b}(R¹Si)_{c}(Si)_{d}

In this formula R¹ may be the same or different and may be selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; however, at least one R¹ in a molecule comprises an alkenyl group, hydrogen atom, halogen atom, epoxy group-containing organic group, acryl group- or methacryl group-containing organic group, amino group-containing organic group, mercapto group-containing organic group, alkoxy group, or hydroxy group; "a", "b", "c", and "d" are numbers that are greater than or equal to 0 and less than or equal to 1, and satisfy a+b+c+d=1; however, "a", "b", and "c" cannot be equal to 0 altogether at the same time.
In the above formula, "R¹" and "a", "b", "c", and "d" are the same as defined above.

The silanes are expressed by the general formula: R¹₄Si, or are structured from at least one structural unit selected from (R¹₃Si), (R¹₂Si), (R¹Si), and (Si). Specific examples include a straight chain polysilane consisting of (R¹₃Si) and (R¹₂Si) units; a cyclic polysilane consisting of (R¹₂Si) units; a branched chain polysilane (polysiline) consisting of (R¹Si) or (Si) units; a polysilane consisting of (R¹₃Si) and (R¹Si) units; a polysilane consisting of (R¹₃Si) and (Si) units; a polysilane consisting of (R¹Si) and (Si) units; a polysilane consisting of (R^{l}₂Si) and (R¹Si) units; a polysilane consisting of (R¹₂Si) and (Si) units; a polysilane consisting of (R¹₃Si), (R¹₂Si), and (R¹Si) units; a polysilane consisting of (R¹₃Si), (R¹₂Si) and (Si) units; a polysilane consisting of (R¹₃Si), (R¹Si), and (Si) units; a polysilane consisting of (R¹₂Si), (R¹Si), and (Si) units; or a polysilane consisting of (R¹₃Si), (R¹₂Si), (R¹Si), and (Si). The number of repetitions of each of the structural units expressed by (R¹₃ Si), (R¹₂Si), (R¹Si), and (Si) is 2 to 10,000, preferably 3 to 1,000, and more preferably 3 to 500.

The silanes described above can be manufactured by methods known in the art. Examples of methods thereof include the method comprising dehalogenation of halosilanes in the presence of an alkali metal described in the Journal of American Chemical Society, 11, 124 (1988); Macromolecules, 23, 3423 (1990), etc.; the method comprising anionic polymerization of disilenes described in Macromolecules, 23, 4494 (1990), etc.; the method comprising dehalogenation of halosilanes via electrode reduction described in J. Chem. Soc., Chem. Commun., 1161 (1990); J. Chem. Soc., Chem. Commun., 897 (1992), etc.; the method comprising dehalogenation of halosilanes in the presence of magnesium (see WO98/29476, etc.); the method comprising dehydration of hydrosilanes in the presence of metal catalysts (see Kokai H4-334551, etc.), and other methods.

The silanes described above may be copolymers. For example, the following copolymers can be used: a copolymer having Si-Si and Si-O-Si bonds; a copolymer having Si-Si and Si-N-Si bonds; a copolymer having Si-Si and Si-(CH₂)ₙ-Si bonds; a copolymer having Si-Si and Si-(C₆H₄)ₙ-Si bonds, or similar silanes.

The silazanes are represented, for example, by the following average unit formula:

(R¹₃SiNR²)ₐ(R¹₂SiNR²)_{b}(R¹SiNR²)_{c}(SiNR²)_{d}

In this formula R¹ may be the same or different and may be selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; however, at least one R¹ in a molecule comprises an alkenyl group, a hydrogen atom, a halogen atom, an epoxy group-containing organic group, an acryl group-or methacryl group-containing organic group, an amino-containing organic group, a mercapto-containing organic group, an alkoxy group, or a hydroxy group; R² is a hydrogen atom, or a substituted or unsubstituted monovalent hydrocarbon group; "a", "b", "c", and "d" are numbers that are greater than or equal to 0 and are less than or equal to 1, and that satisfy "a + b + c+ d = 1"; however, "a", "b", and "c" cannot be 0 altogether at the same time.
In the above formula, "R¹" and "a", "b", "c", and "d" are the same as defined above. Examples of the monovalent hydrocarbon groups represented by R² are the same as the examples of the monovalent hydrocarbon groups for R¹. The groups represented by R² are preferably alkyl groups or hydrogen atoms, and particularly are preferably methyl groups or hydrogen atoms.

The silazanes are structured from at least one of the structural units expressed by (R¹₃SiNR²), (R¹₂SiNR²), (R¹SiNR²), and (SiNR²). Examples thereof include a straight chain polysilazane consisting of (R¹₃SiNR²) and (R¹₂SiNR²) units; a cyclic polysilazane consisting of (R¹₂SiNR²) units; a branched chain polysilazane consisting of (R¹SiNR²) or (SiNR²) units; a polysilazane consisting of (R¹₃SiNR²) and (R¹SiNR²) units; a polysilazane consisting of (R¹₃SiNR²) and (SiNR²) units; a polysilazane consisting of (R¹SiNR²) and (SiNR²) units; a polysilazane consisting of (R¹₂SiNR²) and (R¹SiNR²) units; a polysilazane consisting of (R¹₂ SiNR²) and (SiNR²) units; a polysilazane consisting of (R¹₃SiNR²), (R¹₂SiNR²), and (R¹SiNR²) units; a polysilazane consisting of (R¹₃SiNR²), (R¹₂SiNR²), and (SiNR²) units; a polysilazane consisting of (R¹₃SiNR²), (R¹SiNR²), and (SiNR²) units; a polysilazane consisting of (R¹₂SiNR²), (R¹SiNR²), and (SiNR²) units; and a polysilazane consisting of (R¹₃SiNR²), (R¹₂SiNR²), (R¹SiNR²), and (SiNR²) units. The number of repetitions of the structural units expressed by each of (R¹₃SiNR²), (R¹₂SiNR²), (R¹SiNR²), and (SiNR²) is 2 to 10,000, preferably 3 to 1,000, and more preferably 3 to 500.

The silazanes described above can be prepared by methods known in the art. Examples of methods for preparing the silazanes include those methods described in U. S. Patent Nos. 4312970, 4340619, 4395460, 4404153, 4482689, 4397828, 4540803, 4543344, 4835238, 4774312, 4929742, and 4916200. Other information reported by Burns, et al. can be found in J. Mater. Sci., 22 (1987), pp. 2609-2614.

The silazanes described above may be copolymers. For example, the following copolymers can be used: a copolymer having Si-N-Si and Si-O-Si bonds; a copolymer having Si-N-Si and Si-Si bonds; a copolymer having Si-N-Si and Si-(CH₂)ₙ-Si bonds; a copolymer having Si-N-Si and Si-(C₆H₄)ₙ-Si bonds, or similar polysilazanes. In the formulae, "n" has the same meaning as defined above.

The carbosilanes are expressed, for example, by the following average unit formula:

(R¹₃SiR³)ₐ(R¹₂SiR³)_{b}(R¹SiR³)_{c}(SiR³)_{d}

In this formula R¹ may be the same or different and may be selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; however, at least one R¹ in a molecule comprises an alkenyl group, a hydrogen atom, a halogen atom, an epoxy group-containing organic group, an acryl group-or methacryl group-containing organic group, an amino-containing organic group, a mercapto-containing organic group, an alkoxy group, or a hydroxy group; R³ is an alkylene group, or an arylene group; and "a", "b", "c", and "d" are numbers that are greater than or equal to 0 and are less than or equal to 1, and that satisfy "a + b + c+ d = 1"; however, "a", "b", and "c" cannot be 0 altogether at the same time.
In the above formula, "R¹" and "a", "b", "c", and "d" are the same as defined above. The alkylene group represented by R³ may be expressed, for example, by the formula: - (CH₂)ₙ-, and the arylene group represented by R³ can be expressed, for example, by the formula: -(C₆H₄)ₙ. In the formulae, "n" has the same meaning as defined above.

The carbosilanes are structured from at least one of the structural units expressed by the following: (R¹₃SiR³), (R¹₂SiR³), (R¹SiR³), and (SiR³). Specific examples include a straight chain polycarbosilane consisting of (R¹₃SiR³) and (R¹₂SiR³) units; a cyclic polycarbosilane consisting of (R¹₂SiR³) units; a branched chain polycarbosilane consisting of (R¹SiR³) or (SiR³) units; a polycarbosilane consisting of (R¹₃SiR³) and (R¹SiR³) units; a polycarbosilane consisting of (R¹₃SiR³) and (SiR³) units; a polycarbosilane consisting of (R¹SiR³) and (SiR³) units; a polycarbosilane consisting of (R¹₂SiR³) and (R¹SiR³) units; a polycarbosilane consisting of (R¹₂SiR³) and (SiR³) units; a polycarbosilane consisting of (R¹₃SiR³), (R¹₂SiR³), and (R¹SiR³) units; a polycarbosilane consisting of (R¹₃SiR³), (R¹₂SiR³) and (SiR³) units; a polycarbosilane consisting of (R¹₃SiR³), (R¹SiR³), and (SiR³) units; a polycarbosilane consisting of (R¹₂SiR³), (R¹SiR³), and (SiR³) units; or a polycarbosilane consisting of (R¹₃SiR³), (R¹₂SiR³), (R¹SiR³), and (SiR³). The number of repetitions of each of the structural units expressed by formulae (R¹₃ Si^{R}3), (R¹₂SiR³), (R¹SiR³), and (SiR³) is 2 to 10,000, preferably 3 to 1,000, and more preferably 3 to 500.

The carbosilanes described above can be prepared by methods known in the art. Methods for manufacturing carbosilanes are described, for example, by J. Dunogues, et al. in Macromolecules, 21, 3 (1988), in US Patent No. 3,293,194, by N.S. Nametkin, et al. in Doklady Akademii Nauk SSSR, 28, 1112 (1973), by W.A. Kriner in J. Polym. Sci., Part. A-1, 4, 444 (1966), by N.S. Nametkin, et al. in Doklady Akademii Nauk SSSR, 17, 188(1966), and by C. S. Cundy, C. Eaborn, and M.F. Lappert, in J. Organomet. Chem., 44(2), 291 (1972).

The carbosilanes described above may be copolymers. For example, the following copolymers can be used: a copolymer having Si-(CH₂)ₙ-Si and Si-O-Si bonds; a copolymer having Si-(CH₂)ₙ-Si and Si-Si bonds; a copolymer having Si-(CH₂)ₙ-Si and Si-N-Si bonds; a copolymer having Si-(CH₂)ₙ-Si and Si-(C₆H₄)ₙ-Si bonds; a copolymer having Si-(C₆H₄)ₙ-Si and Si-O-Si bonds; a copolymer having Si-(C₆H₄)ₙ-Si and Si-Si bonds; a copolymer having Si-(C₆H₄)ₙ-Si and Si-N-Si bonds, and similar carbosilanes. In the formulae, "n" has the same meaning as defined above.

If, for example, the silicon-containing compound having the crosslinkable group is a silicon-containing compound having at least two alkenyl groups in one molecule, the component (A) is preferably a crosslinkable composition that further comprises a silicon-containing compound containing at least two silicon-bonded hydrogen atoms in one molecule as a crosslinking agent and a hydrosilylation-reaction catalyst.

Examples of the crosslinkable silicon-containing compound having at least two alkenyl groups in one molecule include the siloxanes, silanes, silazanes, carbosilanes, and copolymers and mixtures thereof. Examples of the alkenyl groups in the silicon-containing compound include groups that are the same as the alkenyl groups represented by the moiety R¹, and vinyl groups are preferable. They may have a straight, branched, cyclic, net-like, or a partially branched straight chain molecular structure, of which the straight chain molecular structure is preferable. The form at 25°C of the silicon-containing compound described above is not particularly limited, and said form may be liquid or solid.

A silicon-containing compound that contains at least two silicon-bonded hydrogen atoms in one molecule is, for example, a siloxane expressed by the following average unit formula:

(R4³SiO_{1/2})ₐ(R⁴₂SiO_{2/2})_{b}(R⁴SiO_{3/2})_{c}(SiO_{4/2})_{d}

In this formula R⁴ may be the same or different and may be selected from monovalent hydrocarbon groups, hydrogen atoms, alkoxy groups, and hydroxy groups that do not include unsaturated aliphatic bonds; however, at least two R⁴ moieties in one molecule are hydrogen atoms; and "a", "b", "c", and "d" are numbers that are greater than or equal to 0 and are less than or equal to 1, and that satisfy "a + b + c+ d = 1"; however, "a", "b", and "c" cannot be 0 altogether at the same time.
Alternately, the silicon-containing compound is expressed by the following general formula:

[(R⁵)₂HSi]ₑR⁶

In this formula R⁵ moieties are substituted or unsubstituted monovalent hydrocarbon groups that may be the same or different; "e" is an integer greater than or equal to 2; and R⁶ is an "e"-valent organic group.

In the first-mentioned siloxanes including at least two silicon-bonded hydrogen atoms in one molecule, examples of the monovalent hydrocarbon groups that are represented by R⁴ in the above formula are the same as the examples described for the monovalent hydrocarbon groups represented by R¹. Examples of the alkoxy groups represented by R⁴ are the same as the examples described for the alkoxy groups represented by R¹. However, in the first-mentioned siloxanes, at least two groups represented by R⁴ in one molecule are hydrogen atoms. Furthermore, "a", "b", "c", and "d" are numbers that are greater than or equal to 0 and are less than or equal to 1. These numbers satisfy "a + b + c + d = 1". However, "a", "b", and "c" cannot be equal to 0 altogether at the same time. Such siloxanes may have a straight, branched, cyclic, net-like, or a partially branched straight chain molecular structure, of which the straight chain molecular structure is preferable. A viscosity of these siloxanes at 25°C is preferably in a range of 1 to 500,000 mPa·s, and more preferably in a range of 1 to 10,000 mPa·s.

In the second-mentioned silicon-containing compound including at least two silicon-bonded hydrogen atoms in one molecule, examples of the monovalent hydrocarbon groups that are represented by R⁵ in the above formula are the same as the examples described for the monovalent hydrocarbon groups represented by R¹. "e" is an integer greater than or equal to 2, preferably an integer in a range of 2 to 6. When R⁶ is an "e"-valent organic group and "e" is equal to 2, examples of the bivalent organic group represented by R⁶ include alkylene groups, alkenylene groups, alkyleneoxyalkylene groups, arylene groups, aryleneoxyarylene groups, or arylene-alkylene-arylene groups. Specific examples of R⁶ are expressed by the following formulae:
-CH₂CH₂-, -CH₂CH₂CH₂-, -CH₂CH(CH₃)-, -CH=CH-,-C≡C-, -CH₂CH₂OCH₂CH₂-, - CH₂CH₂CH₂OCH₂CH₂-,

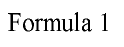

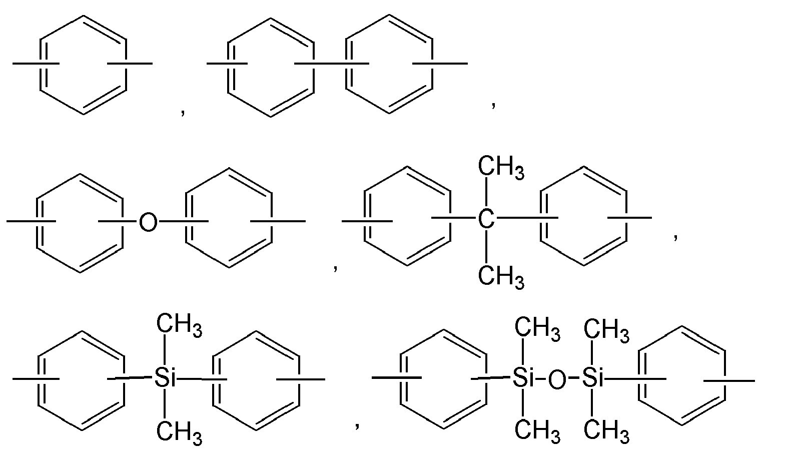

When "e" is equal to 3, examples of the trivalent organic group represented by R⁶ include groups expressed by the following formulae:

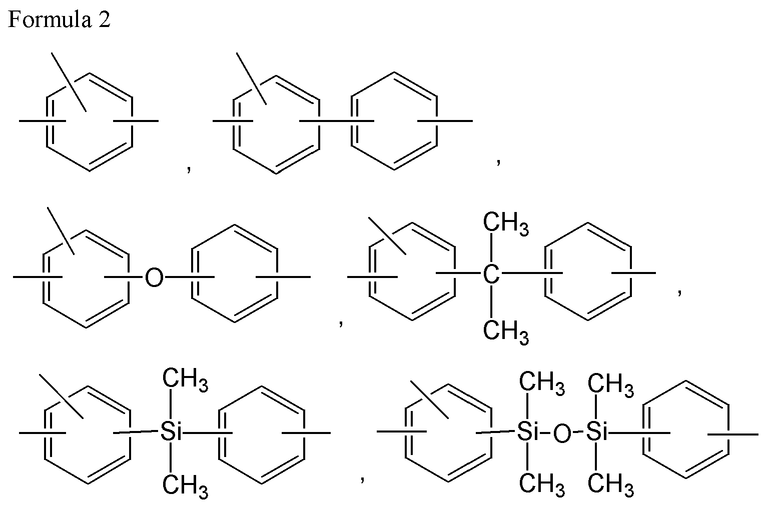

The silicon-containing compound that has at least two silicon-bonded hydrogen atoms in one molecule is added in such a quantity that the content of silicon-bonded hydrogen atoms contained in this component is in the range of 0.1 to 50 moles, preferably 0.1 to 30 moles, and more preferably 0.1 to 10 moles per one mole of the alkenyl groups in the silicon-containing compound having alkenyl groups. If the added amount of the silicon-containing compound is lower than the recommended lower limit, it will be difficult to form silicon-containing crosslinked particles (described hereinafter). If, on the other hand, the added amount exceeds the recommended upper limit, there is possibility of changes over time in the physical properties of the obtained silicon-containing crosslinked particles.

Examples of the hydrosilylation-reaction catalyst include fine platinum powder, platinum black, fine platinum-carrying silica powder, fine platinum-carrying activated carbon, chloroplatinic acid, platinum tetrachloride, an alcoholic solution of chloroplatinic acid, an olefin complex of platinum, and an alkenylsiloxane complex of platinum. The amount in which the hydrosilylation-reaction catalyst can be used is not particularly limited. However, the catalyst is preferably used in such an amount that, in terms of weight, the content of metal atoms in the catalyst is in the range of 0.1 to 1,000 ppm, and more preferably in the range of 1 to 500 ppm, with respect to the silicon-containing compound having alkenyl groups.

If, for example, the crosslinkable silicon-containing compound is a silicon-containing compound having at least two silicon-bonded hydrogen atoms in one molecule, the component (A) is preferably a crosslinkable composition that further comprises a compound containing at least two unsaturated aliphatic bonds in one molecule as a crosslinking agent and a hydrosilylation-reaction catalyst.

Examples of the silicon-containing compound that has at least two silicon-bonded hydrogen atoms in one molecule are the same as those described above.

Examples of the compound having at least two unsaturated aliphatic bonds in one molecule include an aliphatic hydrocarbon compound having unsaturated aliphatic bonds on both molecular terminals and/or in side molecular chains; an aliphatic hydrocarbon compound having unsaturated aliphatic bonds on both molecular terminals and/or in side molecular chains and hetero-atoms other than carbon atoms, such as, for example, nitrogen, oxygen, or boron atoms, in the molecular chain; an aromatic hydrocarbon compound having unsaturated aliphatic bonds in the molecule; an aromatic hydrocarbon compound having unsaturated aliphatic bonds in the molecule and hetero-atoms other than carbon atoms, such as, for example, nitrogen, oxygen, or boron atoms, in the aromatic ring; and a cyclic compound having unsaturated aliphatic bonds in the molecule and also hetero-atoms other than carbon atoms, such as, for example, nitrogen, oxygen, or boron atoms, in the ring.

Examples of the aliphatic hydrocarbon compound having unsaturated aliphatic bonds include compounds expressed by the following formulae:

R⁷-(CH₂)ₓ-R⁷

CH₃-(CHR⁷)ₓ-(CH₂)_{y}-CH₃

CH₃-(CH₂)ₓ-(CH=CH)_{y}-CH₃

CH₃-(CH₂)ₓ-(C≡C)_{y}-CH₃

R⁷-O(CH₂CH₂O)ₓ(CH₂CH₂CH₂O)_{y}-R⁷

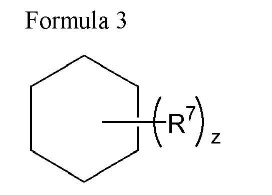

In these formulae, R⁷ represents a monovalent hydrocarbon group having unsaturated aliphatic bonds. Specific examples of such groups include vinyl groups, propenyl groups, butenyl groups, pentenyl groups, hexenyl groups, and similar alkenyl groups; acetyl groups, propynyl groups, pentynyl groups, and similar alkynyl groups. In the formulae, "x" and "y" are integers greater than or equal to 1; and "z" is an integer in a range of 2 to 6.

Examples of the aromatic hydrocarbon compound include compounds expressed by the following general formula:

(R⁷)_{w}R⁸

In this formula, R⁷ represents a monovalent hydrocarbon group having unsaturated aliphatic bonds, and examples thereof are the same as those described above. In this formula, "w" is an integer greater than or equal to 2. When "w" is 2, R⁸ is a bivalent aromatic hydrocarbon group, and specific examples thereof are expressed by the following formulae:

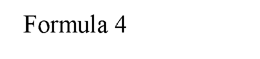

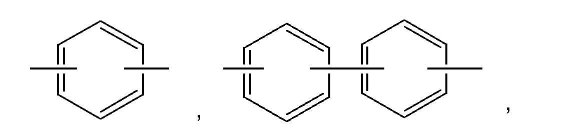

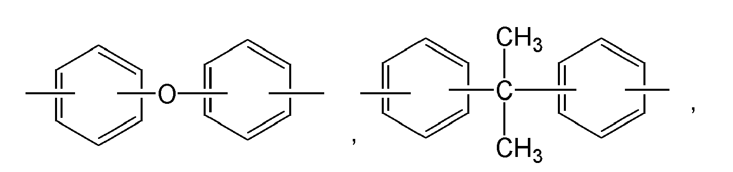

When "w" is 3, R⁸ represents a trivalent aromatic hydrocarbon group, which can be expressed by the following formulae:

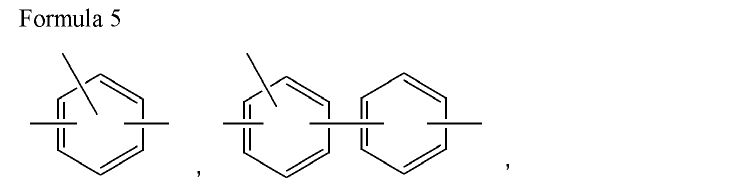

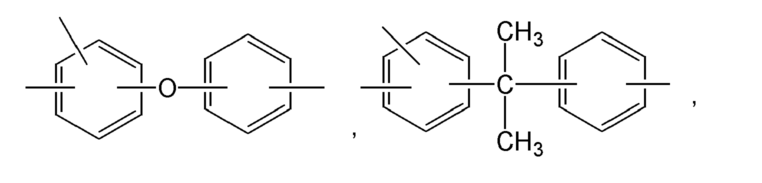

Examples of the aromatic hydrocarbon compound containing hetero-atoms include compounds expressed by the following general formula: 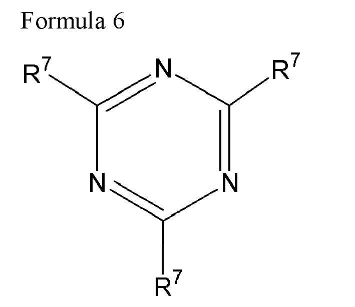 In this formula, R⁷ represents a monovalent hydrocarbon group, and examples thereof are the same as those described above.

Examples of the cyclic compound containing hetero-atoms include cyclic compounds expressed by the following formula: 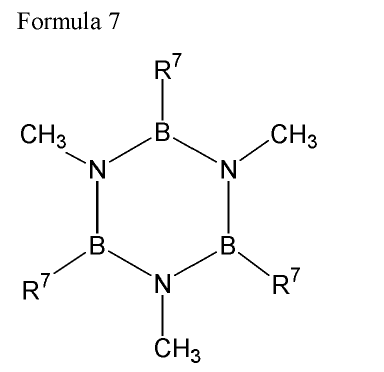 In this formula, R⁷ represents a monovalent hydrocarbon group having unsaturated aliphatic bonds, and examples thereof are the same as those described above.

If, for example, the crosslinkable silicon-containing compound is a crosslinkable silicon-containing compound having at least two silicon-bonded hydroxy groups in one molecule, the component (A) is preferably a crosslinkable composition that further comprises a silicon-containing compound containing at least two silicon-bonded hydrogen atoms in one molecule as a crosslinking agent and a condensation-reaction catalyst.

Examples of the crosslinkable silicon-containing compound having at least two silicon-bonded hydroxy groups in one molecule include the siloxanes, silanes, silazanes, carbosilanes, and copolymers and mixtures thereof, described above. The crosslinkable silicon-containing compound may have a straight, branched, cyclic, net-like, or a partially branched straight chain molecular structure, of which the straight chain molecular structure is preferable. The compound preferably has a viscosity at 25°C in a range of 1 to 500,000 mPa·s, and more preferably in a range of 1 to 100,000 mPa·s.

Examples of the silicon-containing compound that has at least two silicon-bonded hydrogen atoms in one molecule are the same as those described above. The silicon-containing compound having at least two silicon-bonded hydrogen atoms in one molecule is preferably used in an amount of 0.1 to 10 parts by weight, and more preferably 0.1 to 5 parts by weight per 100 parts by weight of the crosslinkable silicon-containing compound.

Examples of the condensation-reaction catalyst include tin naphthenate, tin octoate, tin oleate, tin butyrate, titanium naphthenate, zinc naphthenate, cobalt naphthenate, zinc stearate, butyltin-tri-2-ethylhexoate, dimethyltin dilaurate, dimethyltin dioctoate, dimethyltin dineodecanoate, dibutyltin diacetate, dibutyltin dilaurate, dibutyltin dioctate, dibutyltin diolate, lead-2-ethylhexoate, zinc-2-ethylhexoate, or similar metal salts of a carboxylic acid; tetrabutyl titanate, tetra-2-ethylhexyl titanate, tetraoctadecyl titanate, tetraphenyl titanate, tetra(isopropenyloxy) titanate, and similar organic titanate esters.

An amount of the condensation-reaction catalyst is arbitrary, but is preferably not more than 5 parts by weight per 100 parts by weight of the crosslinkable silicon-containing compound.

If, for example, the crosslinkable silicon-containing compound is a silicon-containing compound having at least two silicon-bonded alkoxy groups or hydroxy groups in one molecule, the component (A) is preferably a crosslinkable composition that further comprises a hydrolysable silane or a partially hydrolyzed condensate thereof as a crosslinking agent and, as necessary, a condensation-reaction catalyst.

Examples of the silicon-containing compound having at least two silicon-bonded alkoxy groups or hydroxy groups in one molecule include the siloxanes, silanes, silazanes, carbosilanes, and copolymers and mixtures thereof, described above. Of these, the siloxanes are preferable. Examples of the silicon-bonded alkoxy groups in the silicon-containing compound include the same alkoxy groups described above for R¹. Of these, methoxy groups and ethoxy groups are preferable. They may have a straight, branched, cyclic, net-like, or a partially branched straight chain molecular structure, of which the straight chain molecular structure is preferable. The compound preferably has a viscosity at 25°C in a range of 1 to 500,000 mPa·s, and more preferably in a range of 1 to 100,000 mPa·s.

Examples of the hydrolysable silane or the partially hydrolyzed condensate thereof include hydrolysable silanes and partially hydrolyzed condensates expressed by the following general formula:

R⁷_{q}SiX_{(4-q)}

In this formula R⁷ is selected from substituted or unsubstituted monovalent hydrocarbon groups, epoxy group-containing organic groups, acryl group- or methacryl group-containing organic groups, amino group-containing organic groups, or mercapto group-containing organic groups; "X" represents a hydrolysable group, and "q" is 0 or 1. Examples of the monovalent hydrocarbon group represented by R⁷ include the same monovalent hydrocarbon groups and alkenyl groups that were described for R¹ of which the alkyl groups are preferable. Examples of the epoxy group-containing organic group represented by R⁷ include the same epoxy group-containing organic groups described above for R¹. Examples of the acryl group- or methacryl group-containing organic group represented by R⁷ include the same acryl group- or methacryl group-containing organic groups described above for R¹. Examples of the amino-containing organic group represented by R⁷ include the same amino group-containing organic groups described for R¹ Examples of the mercapto-containing organic group represented by R⁷ include the same mercapto group-containing organic groups described above for R¹. In the above formula, "X" represents a hydrolysable group such as an alkoxy group, acetoxy group, aminoxy groups, or oxime group. Moreover, "q" is equal to 0 or 1.

Examples of the hydrolysable silanes or partially hydrolyzed condensates thereof described above include methyl silicate, ethyl silicate, methyl cellosolve orthosilicate, n-propyl orthosilicate, or similar alkyl silicates; methyl trimethoxysilane, ethyl trimethoxysilane, methyl triethoxysilane, vinyl trimethoxysilane, aminomethyl triethoxysilane, 3-aminopropyl triethoxysilane, 3-aminopropyl methyldimethoxysilane, N-(2-aminoethyl) aminomethyl tributoxysilane, N-(2-aminoethyl)-3-aminopropyl trimethoxysilane, N-(2-aminoethyl)-3-aminopropyl methyldimethoxysilane, 3-anilinopropyl triethoxysilane, 3-glycidoxypropyl trimethoxysilane, 3-glycidoxypropyl methyldimethoxysilane, 2-(3,4-epoxycyclohexyl) ethyl trimethoxysilane, 2-(3,4-epoxycyclohexyl) ethylmethyldimethoxysilane, or similar alkoxysilanes; methyl triacetoxysilane, ethyl triacetoxysilane, vinyl triacetoxysilane, or similar acetoxysilanes; methyl tris(dimethylketoximino)silane, methyl tris(methylethylketoximino)silane, methyl tris(methylpropylketoximino)silane, methyl tris(methylisobutylketoximino)silane, ethyl tris(dimethylketoximino)silane, ethyl tris(methylethylketoximino)silane, ethyl tris(methylpropylketoximino)silane, ethyl tris(methylisobutylketoximino)silane, vinyl tris(dimethylketoximino)silane, vinyl tris(methylethylketoximino)silane, vinyl tris(methylpropylketoximino)silane, vinyl tris(methylisobutylketoximino)silane, tetrakis(dimethylketoximino)silane, tetrakis(methylethylketoximino)silane, tetrakis(methylpropylketoximino)silane, tetrakis(methylisobutylketoximino)silane, or similar ketoximinosilanes.

The hydrolysable silane or partially hydrolyzed condensate thereof is preferably used in an amount of 0.1 to 10 parts by weight, and more preferably 0.1 to 5 parts by weight per 100 parts by weight of the silicon-containing compound.

Examples of the condensation-reaction catalyst include those described above. An amount of the condensation-reaction catalyst is arbitrary, but is preferably not more than 5 parts by weight per 100 parts by weight of the silicon-containing compound having the crosslinkable group.

If, for example, the silicon-containing compound having the crosslinkable group is a silicon-containing compound having at least one epoxy group-containing organic group in one molecule, the component (A) is preferably a crosslinkable composition that further comprises a crosslinking agent for epoxy resin as a crosslinking agent.

Examples of the silicon-containing compound having at least one epoxy group-containing organic group in one molecule include the siloxanes, silanes, silazanes, carbosilanes, and copolymers and mixtures thereof, described above. Of these, the siloxanes are preferable. Examples of the epoxy group-containing organic group in the silicon-containing compound include the same epoxy group-containing organic groups described above for R¹. Glycidoxyalkyl groups are preferable. They may have a straight, branched, cyclic, net-like, or a partially branched straight chain molecular structure, of which the straight chain molecular structure is preferable. The form at 25°C of the silicon-containing compound described above is not particularly limited, and said form may be liquid or solid.

Examples of the crosslinking agent for epoxy resin include acid anhydrides; phenol compounds; amine compounds; organometallic compounds of aluminum, zirconium, or similar metals; phosphines, or similar organophosphorous compounds; boron complex compounds; and organic ammonium salts, organic sulphonium salts, and similar onium salts.

Examples of the acid anhydride include succinic anhydride, maleic anhydride, itaconic anhydride, octenyl succinic anhydride, dodecenyl succinic anhydride, phthalic anhydride, tetrahydrophthalic anhydride, hexahydrophthalic anhydride, methyltetrahydrophthalic anhydride, methylhexahydrophthalic anhydride, tetrabromophthalic anhydride, himic anhydride, methylnadic anhydride, dodecyl succinic anhydride, chlorendic anhydride, trialkyltetrahydrophthalic anhydride, diphenic anhydride, pyromellitic anhydride, benzophenonetetracarboxylic anhydride, ethyleneglycol bis(anhydrotrimate), methylcyclohexene-tetracarboxylic anhydride, biphenyltetracarboxylic anhydride, diphenylether-tetracarboxylic anhydride, butanetetracarboxylic dianhydride, cyclopentanetetracarboxylic anhydride, benzophenonetetracarboxylic anhydride, bicyclo[2.2.2]oct-7-ene-2,3,5,6-tetracarboxylic anhydride, β,γ-aconitic anhydride, glycolic anhydride, trimellitic anhydride, and polyazelaic anhydride.

Examples of the amine compound include: octylamine, ethylamine, hexylamine, dioctylamine, triethylamine, trihexylamine, triethylenetetramine, ethylenediamine, dimethylethylenediamine, benzyldimethylamine, α-methylbenzyl dimethylamine, 1,8-diazabicyclo[5.4.0]undec-7-ene, or similar amines; aminoethyl-aminopropylmethyldimethoxysilane, or similar aminosilanes; and amino-containing siloxane polymers. Examples of the organophosphorous compounds include triphenylphosphine, tributylphosphine, tri(p-methylphenyl)phosphine, tri(nonylphenyl)phosphine, triphenyl phosphine-triphenylborate, and tetraphenylphosphine-tetraphenylborate.

Examples of the onium salt include phosphonium salt, iodonium salt, and sulfonium salt. Examples of the phosphonium salt include: benzyltriphenyl phosphonium chloride, benzyltriphenyl phosphonium bromide, benzyltriphenyl phosphonium tetrafluoroborate, antimonybenzyl triphenylphosphonium hexafluoride, (p-butoxybenzyl) triphenylphosphonium bromide, (p-butoxybenzyl) triphenylphosphonium chloride, (p-methoxybenzyl) triphenylphosphonium chloride, (dimethoxybenzyl) triphenylphosphonium bromide, (p-dimethylaminobenzyl) triphenylphosphonium chloride, (p-butoxybenzyl) triphenylphosphonium tetrafluoroborate, (p-butoxybenzyl) triphenylphosphonium hexafluoroantimonate, (p-butoxybenzyl) triphenylphosphonium tetraphenylborate, (p-butoxybenzyl) triphenylphosphonium acetate, (p-butoxybenzyl) triphenylphosphonium tetra(perfluorophenyl) borate, (p-butoxybenzyl) triphenylphosphonium iodide, phenacyltriphenylphosphonium bromide, phenacyltriphenylphosphoniumchloride, ethoxycarbonyl methyltriphenylphosphonium, naphthalenyl methyltriphenylphosphonium chloride, fluorenyl triphenylphosphonium chloride, anthracenyl methyltriphenylphosphonium chloride, anthracenyl methyltriphenylphosphonium bromide, pyrenyl methyltriphenylphosphonium bromide, and pyrenyl methyltriphenylphosphoniumchloride.

Examples of the iodonium salt include: diphenyl iodonium chloride, diphenyl iodonium bromide, diphenyl iodonium tetra(perfluorophenyl) borate, diphenyl iodonium tetrafluoroborate; [phenyl-p-(2-hydroxytetradecyloxy)phenyl] iodonium hexafluoroantimonate, [phenyl-p-(2-hydroxytetradecyloxy)phenyl] iodonium chloride, [phenyl-p-(2-hydroxytetradecyloxy)phenyl] iodonium bromide, tetra(perfluorophenyl) [phenyl-p-(2-hydroxytetradecyloxy)phenyl] iodonium borate, bis(p-dodecylphenyl) iodonium hexafluoroantimonate, bis(p-dodecylphenyl) iodonium chloride, bis(p-dodecylphenyl) iodonium bromide, bis(p-dodecylphenyl) iodonium tetrafluoroborate, tetra(perfluorophenyl) bis(p-dodecylphenyl) iodonium borate, (p-n-decyloxyphenyl)phenyl iodonium hexafluoroantimonate, [p-(2-hydroxy-n-tetradecyloxy)phenyl]phenyl iodonium trifluoromethanesulfonate, [p-(2-hydroxy-n-tetradecyloxy)phenyl]phenyl iodonium hexafluorophosphate, [p-(2-hydroxy-n-tetradecyloxy)phenyl]phenyl iodonium tetrakis(pentafluorophenyl) borate, bis(p-t-butylphenyl) iodonium hexafluoroantimonate, bis(p-t-butylphenyl) iodonium hexafluorophosphate, bis(p-t-butylphenyl) iodonium trifluoromethane sulfonate, bis(p-t-butylphenyl) iodonium tetrafluoroborate, bis(dodecylphenyl) iodonium hexafluoroantimonate, bis(dodecylphenyl) iodonium tetrafluoroborate, bis(dodecylphenyl) iodonium hexafluorophosphate, and bis(dodecylphenyl) iodonium trifluoromethane sulfonate.

Examples of the sulfonium salt include: (p-butoxybenzyl) diphenylsulfonium bromide, (p-butoxybenzyl) diphenylsulfonium chloride, (p-butoxybenzyl) diphenylsulfonium tetrafluoroborate, (p-butoxybenzyl) diphenylsulfonium hexafluoroantimonate, (p-butoxybenzyl)diphenylsulfonium tetraphenylborate, (p-butoxybenzyl) diphenylsulfonium acetate, trimethylsulfonium iodide, diphenylmethylsulfonium tetrafluoroborate, diphenylmethylsulfonium iodide, dibenzylmethylsulfonium bromide, benzyldiphenylsulfonium chloride, benzyldodecylmethylsulfonium bromide, (3-methyl-2-butenyl) tetramethylenesulfonium iodide, (2-butenyl) tetramethylene sulfonium hexafluoroantimonate, methyloctylphenacyl sulfonium bromide, benzylmethyloctyl sulfoniumbromide, benzyldodecylmethyl sulfonium iodide, and benzyldodecyl methylsulfonium iodide.

The amount in which the crosslinking agent for epoxy resin is used is not particularly limited, but preferably the added amount is in a range of 0.001 to 20 parts by weight per 100 parts by weight of the silicon-containing compound having the crosslinkable group.

If, for example, the crosslinkable silicon-containing compound is a silicon-containing compound having at least one alkenyl-, acryl-, or methacryl-containing organic group in one molecule, the component (A) is preferably a crosslinkable composition that further comprises a radical initiator.

Examples of the silicon-containing compound having at least one alkenyl-, acryl-, or methacryl-containing organic group in one molecule include the siloxanes, silanes, silazanes, carbosilanes, and copolymers and mixtures thereof, described above. Of these, the siloxanes are preferable. Examples of the alkenyl-, acryl-, or methacryl-containing organic group include the same alkenyl-, acryl-, or methacryl-containing organic groups described for R¹. They may have a straight, branched, cyclic, net-like, or a partially branched straight chain molecular structure, of which the straight chain molecular structure is preferable.
The form at 25°C of the silicon-containing compound described above is not particularly limited, and said form may be liquid or solid.

Examples of the radical initiator include organic peroxides, photoinitiators, and photosensitizers. Examples of the organic peroxide include dibenzoyl peroxide, bis-p-chlorobenzoyl peroxide, bis-2,4-dichlorobenzoyl peroxide, di-t-butyl peroxide, dicumyl peroxide, t-butyl perbenzoate, 2,5-dimethyl-2,5 di-(t-butylperoxy)hexane, t-butyl peroxyacetate, benzoyl peroxide, bis(o-methylbenzoyl peroxide), bis(m-methylbenzoyl peroxide), bis(p-methylbenzoyl peroxide), 2,3-dimethylbenzoyl peroxide, 2,4-dimethylbenzoyl peroxide, 2,6-dimethylbenzoyl peroxide, 2,3,4-trimethylbenzoyl peroxide, 2,4,6- trimethylbenzoyl peroxide, t-butylperoxy isopropyl monocarbonate, and mixtures thereof.

Examples of the photoinitiator include 2,2-dialkoxy-1,2-diphenylethan-1-one, 2-alkoxy-1,2-diphenylethan-1-one, or similar benzoin ether derivatives.

Examples of the photosensitizer include benzyl and derivatives thereof, aromatic diazonium salts, anthraquinone and derivatives thereof, acetophenone and derivatives thereof, diphenyl disulfide, and benzophenone and derivatives thereof.

The amount in which the radical initiator described above is used is not particularly limited, but the amount is preferably 0.01 to 20 wt.%, and more preferably 0.1 to 10 wt.% of the weight of the silicon-containing compound having the crosslinkable group described above.

By crosslinking the component (A) in a uniform phase comprising (B) a liquid or melt that does not participate in the crosslinking reaction of the crosslinkable composition, silicon-containing crosslinked particles can be obtained that are formed by causing phase separation from the component (B). These silicon-containing crosslinked particles are precursors of a silicon-containing carbon-based composite material, which is the electrode active material of the present invention (described hereinafter). The silicon-containing crosslinked particles may be extracted from the component (B) and either be baked in a subsequent baking step as isolated particles, or be baked in a subsequent step as a dispersion in which the silicon-containing crosslinked particles are dispersed in the component (B).

When initiating the crosslinking reaction of the component (A), the component (B) and the component (A) form a uniform phase. The component (B) separates from the product of the crosslinking reaction of the component (A) (i.e. the silicon-containing crosslinked particles), and forms silicon-containing crosslinked particles dispersed in a continuous phase of the component (B). It is necessary that this component (B) does not participate in the crosslinking reaction of the component (A).

The formation of the uniform phase comprising the component (A) and the component (B) can be confirmed by the presence/absence of phase separation. When heating is required in the crosslinking reaction of the component (A), it is sufficient that the component (B) forms the uniform phase at an initial temperature of the crosslinking reaction of the component (A). Moreover, the component (B) need not form the uniform phase under conditions where the crosslinking reaction temperature is not reached.

Proportions of the component (A) and the component (B) in the uniform phase are not particularly limited. From the perspectives of facilitating control of the diameter of the obtained silicon-containing crosslinked particles and preventing declines in production efficiency of the silicon-containing crosslinked particles, a weight ratio (A):(B) is preferably from 80:20 to 0.1:99.9 and more preferably from 70:30 to 20:80.

The uniform phase can be formed by mixing the component (A) and the component (B) using a method known in the art. For example, mixing can be performed using a known mixing apparatus. When the component (A) and the component (B) form the uniform phase at the crosslinking reaction temperature of the component (A), or when the component (B) is solid at room temperature (25°C), a mixing machine provided with heating means is preferably used. Examples of preferable mixing apparatuses include Ross® mixers, planetary mixers, Henschel® mixers, ribbon blenders, high-speed mixers, homomixers, paddle mixers, homo-dispers, propeller-type stirrers, homogenizers, kneaders, single-screw extruders, double-screw extruders, and vacuum kneaders.

Examples of the component (B) as a liquid include compounds that are liquid at room temperature (25°C). A molecular structure thereof is not particularly limited, and may be a straight, partially branched linear, cyclic, or branched chain molecular structure, of which the straight or cyclic chain molecular structures are preferable. Examples of the liquid described above include silicone oils, silicon-free organic oils, solvents, and mixtures thereof.

A silicone oil that forms a uniform phase with the component (A) and does not participate in the crosslinking reaction of the component (A) can be appropriately selected and used. A single silicone oil may be used or a combination of two or more types of silicone oils can be used.

If the silicon-containing particles are crosslinked via a hydrosilylation reaction, molecules of the silicone oil preferably do not contain alkenyl groups or silicon-bonded hydrogen atoms. Examples thereof include a dimethylpolysiloxane capped at both molecular terminals with trimethylsiloxy groups, a methylphenylpolysiloxane capped at both molecular terminals with trimethylsiloxy groups, a copolymer of a methylphenylsiloxane and a dimethylsiloxane capped at both molecular terminals with trimethylsiloxy groups, a copolymer of a methyl(3,3,3-trifluoropropyl) siloxane and a dimethylsiloxane capped at both molecular terminals with trimethylsiloxy groups, a cyclic dimethylsiloxane, a cyclic methylphenylsiloxane, and mixtures thereof.

If the silicon-containing particles are crosslinked via a condensation reaction, then in addition to molecules of the silicone oil not containing silanol groups, silicon-bonded hydrogen atoms, or silicon-bonded hydrolysable groups, other silicone oils can be used, and examples thereof include a dimethylpolysiloxane capped at both molecular terminals with dimethylvinylsiloxy groups, a copolymer of a methylvinylsiloxane and a dimethylsiloxane capped at both molecular terminals with dimethylvinylsiloxy groups, a methylvinylpolysiloxane capped at both molecular terminals with trimethylsiloxy groups, a cyclic methylvinylsiloxane, and mixtures thereof.

The viscosity of the silicone oil at 25°C is not particularly limited, but the oil viscosity is preferably in a range of 1 to 100,000,000 mPa·s, and more preferably in a range of 2 to 10,000,000 mPa·s. Furthermore, the silicone oil may be a modified silicone oil, such as a silicone polymer modified with epoxy, acryl, or ether (ethyleneoxide or propyleneoxide).

A silicon-free organic oil that forms a uniform phase with the component (A) and does not participate in the crosslinking reaction of the component (A) can be appropriately selected and used. A single organic oil may be used or a combination of two or more types of organic oil can be used.

Examples of preferable silicon-free organic oils include aliphatic oils and aromatic oils that have a straight, partially branched straight, cyclic, or branched chain molecular structure, of which aliphatic organic oils with a straight or cyclic chain molecular structure are preferable. If the silicon-containing particles are crosslinked via a hydrosilylation reaction, molecules of the organic oil preferably do not contain aliphatic groups that have unsaturated double bonds such as alkenyl groups or the like. If the silicon-containing particles are crosslinked via a condensation reaction, molecules of the organic oil preferably do not contain silanol groups, silicon-bonded hydrogen atoms, or silicon-bonded hydrolysable groups.

Preferable examples of the organic oil include carnauba wax, candelilla wax, Japan wax, whale wax, jojoba oil, montan wax, beeswax, lanolin, and other waxes; dioctyl phthalate, hexyl laurate, isopropyl myristate, myristyl myristate, cetyl myristate, 2-octyldodecyl myristate, isopropyl palmitate, 2-ethylhexyl palmitate, butyl stearate, decyl oleate, 2-octyldodecyl oleate, myristyl lactate, cetyl lactate, lanolin acetate, stearyl alcohol, cetostearyl alcohol, oleyl alcohol, avocado oil, almond oil, olive oil, cacao butter, jojoba oil, sesame oil, safflower oil, soybean oil, camellia oil, squalane, persic oil, castor oil, mink oil, cotton oil, coconut oil, egg yolk oil, lard, or similar oil and fats; polypropyleneglycol monooleate, neopentylglycol-2-ethylhexanoate, or similar glycolester oils; triglyceride isostearate, coconut oil fatty acid triglyceride, and similar polyhydric alcohol ester oils; polyoxyethylene lauryl ether, polyoxypropylene cetyl ether, and similar polyoxyalkylene ether oils; and mixtures thereof.

The viscosity of the organic oil at 25°C is not particularly limited, but the oil viscosity is preferably in a range of 1 to 100,000,000 mPa·s, and more preferably the viscosity at 25°C is in a range of 2 to 10,000,000 mPa·s.

A solvent that forms a uniform phase with the component (A) and does not participate in the crosslinking reaction of the component (A) can be appropriately selected and used. A single solvent may be used or a combination of two or more types of solvents can be used.

Preferable examples of the solvent include benzene, toluene, xylene, or similar aromatic hydrocarbons; hexane, cyclohexane, heptane, 2,2,4-trimethylpentane, octane, isoparaffin, or similar aliphatic hydrocarbons; acetone, methyl ethyl ketone, methyl isobutyl ketone, or similar ketones; dimethylether, diethylether, dibutylether, tetrahydrofuran, 2,4-dioxane, or similar ethers; butyl formate, methyl acetate, ethyl acetate, butyl acetate, ethyl propionate, cellosolve acetate, isopropyl laurate, isopropyl palmitate, or similar esters; methyl alcohol, ethyl alcohol, denaturated ethyl alcohol, isopropyl alcohol, n-butyl alcohol, isobutyl alcohol, tert-butyl alcohol, sec-butyl alcohol, tert-amyl alcohol, 3-pentanol, actyl alcohol, benzyl alcohol, cyclohexanol, furfuryl alcohol, ethylene glycol, glycerin, diethyleneglycol, undecyl alcohol, or similar alcohols; methyl cellosolve, cellosolve, isopropyl cellosolve, butyl cellosolve, ethyleneglycol monomethyl ether, ethyleneglycol monoethyl ether, diethyleneglycol monomethyl ether, diethyleneglycol monoethyl ether, or similar ether alcohols; carbon tetrachloride, methylene chloride, or similar chlorides; and mixtures thereof.

A melt of the component (B) that is a solid at room temperature (25°C); is an organic polymer that becomes a liquid at a temperature greater than or equal to the melting point or the softening point thereof; forms a uniform phase with the component (A) at the crosslinking reaction temperature of the component (A); and does not participate in the crosslinking reaction may be appropriately selected and used. A single melt may be used or a combination of two or more types of melts can be used.

Preferable examples of the melt include paraffin that is in a wax-like state at room temperature; polyethylene, polypropylene, polystyrene, polymethyl methacrylate, urethane resins, AS resins, ABS resins, polyvinyl chloride, polyacetal, polycarbonate, polyester, coal tar, high molecular aromatic compounds, phenolic resins, epoxy resins, urea resins, melamine resins, fluoro resins, imide resins, urethane resins, and mixtures thereof.

Additionally, by mixing a solvent or similar liquid having compatibility with the melt, a solution state or, rather, a state in which the melt is a liquid at room temperature (25°C) can be achieved and forming of the uniform phase with the component (A) can be facilitated. The solvent described above is preferably used as the liquid, and examples thereof are the same as those described above. Among these, aromatic hydrocarbons, aliphatic hydrocarbons, ketones, ethers, and esters are preferable, aromatic hydrocarbons are more preferable, and toluene and xylene are even more preferable.

The silicon-containing crosslinked particles are formed by the induction of phase separation caused by crosslinking the crosslinkable composition in the uniform phase comprising the liquid and the melt. Reaction parameters such as the crosslinking reaction temperature when forming the silicon-containing crosslinked particles are not particularly limited and may be appropriately set according to the type of crosslinking reaction the crosslinkable composition is subjected to. The crosslinking reaction temperature is, for example, preferably in a range of room temperature to 250°C and more preferably in a range of 50 to 180°C. The crosslinking reaction may be performed while mixing the uniform phase comprising the crosslinkable composition and the liquid or the melt in a mixing apparatus. Alternately, the crosslinking reaction may be performed by allowing the uniform phase comprising the crosslinkable composition and the liquid or the melt to sit at rest under a reaction temperature atmosphere.

Although the diameter of the silicon-containing crosslinked particles is not particularly limited, the average diameter thereof is preferably in a range of 5 nm to 50 µm, more preferably in a range of 10 nm to 20 µm, and even more preferably in a range of 20 nm to 5 µm.

The electrode active material of the present invention comprises a silicon-containing carbon-based composite material obtained by baking the silicon-containing crosslinked particles. The silicon-containing carbon-based composite material may be obtained by baking the silicon-containing crosslinked particles extracted from the component (B) after the crosslinking reaction or, alternately, may be obtained by baking a dispersion in which the silicon-containing crosslinked particles are dispersed in the component (B).

Furthermore, the silicon-containing carbon-based composite material may be obtained by mixing the silicon-containing crosslinked particles extracted from the component (B) after the crosslinking reaction and (C) carbon or an organic material that is carbonized by heating and, thereafter, baking said mixture. Alternately, the silicon-containing carbon-based composite material may be obtained by mixing the dispersion in which the silicon-containing crosslinked particles are dispersed in the component (B) and (C) the carbon or organic material that is carbonized by heating and, thereafter, baking said mixture. Here, the silicon-containing carbon-based composite material may have a form where the baked product of the silicon-containing crosslinked particles is dispersed in a continuous phase comprising a carbon phase derived from the component (C). Additionally, when the silicon-containing crosslinked particles has low compatibility with the component (C), the silicon-containing carbon-based composite material may have a form in which a surface of the carbon phase derived from the component (C) is coated with the baked product of the silicon-containing crosslinked particles.

The carbon of the component (C) is elemental carbon, and specific examples thereof include activated carbon, natural graphite, artificial graphite, various coke powders, mesophase carbon fibers, vapor-grown carbon fibers, pitch-based carbon fibers, PAN-based carbon fibers (Polyacrylonitrile), various fired resin products, fired plant products, and similar carbons.

The organic material that is carbonized by heating the component (C) may be the same material as that described for the liquid or melt that constitutes the component (B). Specific examples thereof include paraffin that is in a liquid or a wax-like state at room temperature; polyethylene, polypropylene, polystyrene, polymethyl methacrylate, urethane resins, AS resins, ABS resins, polyvinyl chloride, polyacetal, aromatic polycarbonate resins, aromatic polyester resins, coal tar, phenolic resins, epoxy resins, urea resins, melamine resins, fluoro resins, imide resins, urethane resins, furan resins, and mixtures thereof. Among these, aromatic polycarbonate resins, aromatic polyester resins, coal tar, phenolic resins, fluoro resins, imide resin, furan resins, and similar high molecular aromatic compounds and melamine resins are preferable. This is because forming a graphene structure is facilitated due to the excellent efficiency when carbonizing by heating.

While an amount of the component (C) used can be selected arbitrarily, from the perspectives of obtaining a high carbonization yield of the silicon-containing carbon-based composite material and superior performance as an electrode active material, the amount of the component (C) is preferably not more than 80 wt.% of the total weight of the silicon-containing crosslinked particles or the dispersion in which the silicon-containing crosslinked particles are dispersed prior to baking.

Baking is performed by heating at a temperature of 300 to 1500°C and preferably 600 to 1300°C in an inert gas or in a vacuum. Examples of the inert gas include nitrogen, helium, and argon. Note that the inert gas may comprise hydrogen gas or similar reducing gases.

The heating method of the carbonization furnace is not particularly limited, and carbonization can be carried out in a carbonization furnace of a fixed-bed type or a fluidized-bed type, provided that the furnace is capable of heating the product to an appropriate temperature. Examples of the carbonization furnace include Reidhammer, tunnel, and single type furnaces.

The electrode active material comprising the silicon-containing carbon-based composite material obtained by the process described above can be expressed by the following average composition formula:

Si_{1.00}CₕO_{f}H_{g}

In this formula, "h", "f', and "g" are numbers that satisfy 0.5<h<100, 0≤f<5, and O≤g<10, respectively. Preferably, 1.5<f<70, and more preferably 2.0<f<50.

The silicon-containing carbon-based composite material may be further subjected to surface coating by carbon.

Any arbitrary carbon surface coating process may be used for coating the silicon-containing carbon-based composite material. For example, a carbon layer may be provided on the surface of the silicon-containing carbon-based composite material by performing thermal chemical vapor deposition at a temperature of not less than 800°C in a non-oxidation atmosphere. Moreover, by mixing the component (C) and the silicon-containing carbon-based composite material and then baking, a silicon-containing carbon-based composite material coated with a carbon phase derived from the component (C) can be obtained.

The apparatus used for the thermal chemical vapor deposition is not particularly limited provided that it has means for heating to not less than 800°C in a non-oxidation atmosphere, and may be appropriately selected depending on the purpose thereof. Apparatuses using continuous methods and/or batch methods can be used, and specific examples thereof include fluidized bed-furnaces, revolving furnaces, vertical moving bed furnaces, tunnel furnaces, batch furnaces, batch-type rotary kilns, and continuous rotary kilns.

Specific examples of the vapor deposition carbon source used in the thermal chemical vapor deposition include methane, ethane, ethylene, acetylene, propane, butane, butene, pentane, isobutane, hexane, and similar aliphatic hydrocarbons or mixtures thereof; benzene, divinylbenzene, monovinylbenzene, ethylvinylbenzene, toluene, xylene, styrene, ethylbenzene, diphenylmethane, naphthalene, phenol, cresol, nitrobenzene, chlorobenzene, indene, coumarone, pyridine, anthracene, phenanthrene, and similar aromatic hydrocarbons; gas light oil, creosote oil, anthracene oil, or cracked naphtha tar oil obtained in a tar distillation process; exhaust gas produced in the baking process; and mixtures thereof. Generally, methane or acetylene is used.

The non-oxidation atmosphere can be formed by introducing the vapor deposition carbon source gas or flash gas thereof; argon gas, helium gas, hydrogen gas, nitrogen gas, or similar non-oxidizing gases; or a gas mixture thereof into the thermal chemical vapor deposition apparatus.

Baking may be carried out in the same way when mixing the component (C) and the silicon-containing carbon-based composite material and then baking to obtain a silicon-containing carbon-based composite material coated with a carbon phase derived from the component (C). In this case, preferable examples of the component (C) are the same as those described above.

When coating the surface of the silicon-containing carbon-based composite material with carbon, an amount of the carbon applied is preferably from 1 to 50 wt.%, more preferably from 5 to 30 wt.%, and even more preferably from 5 to 20 wt.% of the weight of the silicon-containing carbon-based composite material. When the amount is within this range, even when using the silicon-containing carbon-based composite material alone as the electrode active material, the silicon-containing carbon-based composite material will have suitable conductivity, and declines in the charge and discharge capacity of the electrode can be suppressed.

### Electrode

The electrode active material has high reversible capacity and stable charge and discharge cycle characteristics, and can be used in the manufacturing of an electrode that has little electrical potential loss when lithium is discharged, via a simple manufacturing process. Thus, the electrode active material can be suitably used as an electrode active material for electricity storage devices, especially nonaqueous electrolyte secondary batteries. The electrode active material is particularly suitable as the active material of the negative electrode of lithium secondary batteries.

The form and fabrication method of the electrode comprising the silicon-containing carbon-based composite material used in the present invention is not particularly limited. Examples thereof include methods in which the electrode is fabricated by mixing the silicon-containing carbon-based composite material with a binder, and methods in which the electrode is fabricated by mixing the silicon-containing carbon-based composite material with a binder and a solvent, contact binding or coating the obtained paste on a current collector and, thereafter, drying the electrode. An amount of the paste that is coated on the current collector is not particularly limited and, generally, an amount of 0.3 to 15 mg/cm² is preferable, and an amount of 0.5 to 10 mg/cm² is more preferable. Moreover, a thickness of the paste coated on the current collector is, for example, preferably from 30 to 500 µm and more preferably from 50 to 300 µm. Means for drying after coating are not particularly limited, but heating under vacuum drying is preferable. A thickness of the electrode material on the current collector after drying is preferably 10 to 300 µm and more preferably 20 to 200 µm. When the silicon-containing carbon-based composite material is fibrous, the electrode can be fabricated by orienting the material in a single direction and forming the material into a fabric or similar structure, or bundling or weaving metal, conducting polymer, or similar conductive fibers. Terminals may be incorporated as necessary when forming the electrode.

The current collector is not particularly limited, and examples thereof include metal meshes, foils, and the like made from copper, nickel, alloys thereof, and the like.

Examples of the binder include fluorine-based (e.g. polyvinylidene fluoride and polytetrafluoroethylene) resins, styrene-butadiene resins, and the like. An amount in which the binder is used is not particularly limited, but a lower limit thereof is preferably in a range of 5 to 30 parts by weight and more preferably in a range of 5 to 20 parts by weight, per 100 parts by weight of the silicon-containing carbon-based composite material. When the amount of the binder used is within these ranges, for example, bonding strength of the silicon-containing carbon-based composite material on the surface of the current collector will be excellent; and the formation of an insulating layer, which is a cause of increased internal resistance of the electrode, will be suppressed. A method for preparing the paste is not particularly limited, and examples thereof include methods in which a mixed liquid (or dispersion) comprising the binder and an organic solvent is mixed with the silicon-containing carbon-based composite material.

A solvent that can dissolve or disperse the binder is generally used as the solvent, and examples thereof include N-methylpyrrolidone, N,N-dimethylformamide, and similar organic solvents. An amount in which the solvent is used is not particularly limited provided that when mixed with the binder, the mixture thereof has a paste-like form, but generally the amount is preferably in a range of 0.01 to 500 parts by weight, more preferably in a range of 0.01 to 400 parts by weight, and even more preferably in a range of 0.01 to 300 parts by weight, per 100 parts by weight of the silicon-containing carbon-based composite material.

Additives may be compounded in the electrode of the present invention as desired. For example, a conductivity promoter may be added to the electrode during manufacturing.

Examples of the conductivity promoter include carbon blacks (e.g. ketjen black, acetylene black), carbon fibers, and carbon nanotubes. A single conductivity promoter may be used or a combination of two or more types of conductivity promoters can be used. The conductivity promoter can, for example, be mixed with the paste comprising the silicon-containing carbon-based composite material, the binder, and the solvent.

An amount in which the conductivity promoter is compounded is not particularly limited, but is preferably in a range of 4 to 30 parts by weight and more preferably in a range of 5 to 20 parts by weight, per 100 parts by weight of the silicon-containing carbon-based composite material. When the amount is within this range, conductivity will be excellent and declines in the charge and discharge capacity of the electrode can be suppressed.

When the surface of the silicon-containing carbon-based composite material is carbon surface-coated by thermal chemical vapor deposition or the like, an amount of the conductivity promoter compounded, together with the amount of carbon coated on the surface of the silicon-containing carbon-based composite material, is preferably 2 to 60 wt.%, more preferably 5 to 40 wt.%, and even more preferably 5 to 20 wt.% of the weight of the silicon-containing carbon-based composite material. When the amount is within this range, conductivity will be excellent and declines in the charge and discharge capacity of the electrode can be suppressed.

Graphite or a similar negative electrode active material may be compounded in the electrode of the present invention as another optional additive.

### Electricity storage device

The type of electricity storage device provided with the electrode of the present invention and a method for manufacturing the same is not particularly limited, and examples thereof include lithium-ion primary batteries, lithium-ion secondary batteries, capacitors, hybrid capacitors (redox capacitors), organic radical batteries, and dual carbon batteries, of which lithium-ion secondary batteries are preferable. The lithium-ion secondary battery may be manufactured according to a generally known method using battery components including a negative electrode comprising the electrode described above, a positive electrode capable of storing and discharging lithium, an electrolyte solution, a separator, a current collector, a gasket, a sealing plate, a case, and the like.

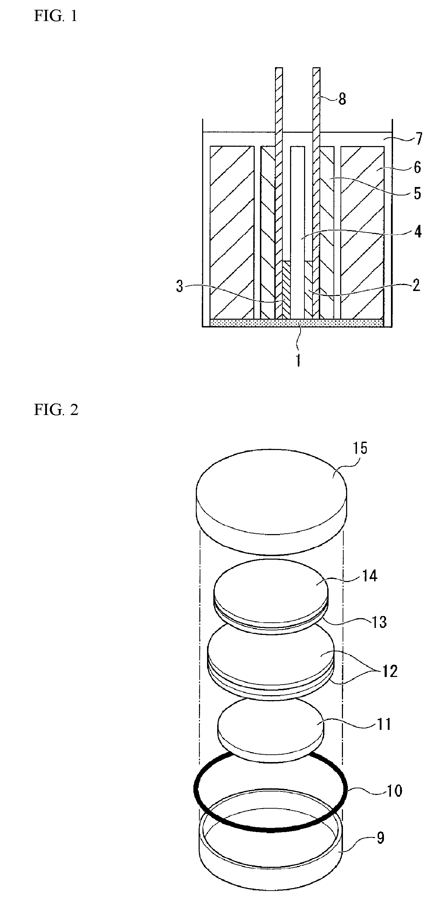

Preferable forms (lithium secondary batteries) of the electricity storage device of the present invention are illustrated in detail in FIGS. 1 and 2. FIG. 1 is a cross-sectional view illustrating an example of the battery (lithium secondary battery) of the present invention, fabricated according to the Practical Examples. A substantially cylindrical container is included in this lithium secondary battery. An appropriate amount of a molecular sieve 1 is disposed in a bottom of the container of this lithium secondary battery, but the molecular sieve 1 is optional. Additionally, in the lithium secondary battery, a separator 4 is disposed in a diameter direction thereof, and a positive electrode 2 and a negative electrode 3 that comprises the electrode formed from the silicon-containing carbon-based composite material are disposed respectively on each side of the separator 4. Current collectors 8, polypropylene plates 5, and polypropylene fillers 6 are disposed sequentially on outer sides of the positive electrode 2 and the negative electrode 3 toward the peripheral side of the container. However, the polypropylene plates 5 and the polypropylene fillers 6 are optional components.

The separator 4 is constituted by a pair of substantially flat plate-like members that are abutted against each other, having a predetermined dimension that is less than a height dimension of the container. However, a single member may alternately be used. The positive electrode 2 and the negative electrode 3 that each are abutted against the separator 4 are both constituted by substantially flat plate-like members that are smaller than the separator 4, and are disposed so as to be mutually opposing via the separator 4. The current collectors 8 that are abutted against the outer sides of the positive electrode 2 and the negative electrode 3 are constituted by a pair of flat plate-like members having a height that is greater than the height dimension of the container, and end portions thereof protrude from the container. The polypropylene plates 5 that are abutted against the outer sides of the current collectors 8 are constituted by a pair of substantially flat plate-like members having a height that is substantially the same as the height of the separator 4. Furthermore, the polypropylene fillers 6 that are disposed on the outer sides of the polypropylene plates 5, with a space therebetween, are constituted by a pair of substantially semi-cylindrical (partially cylindrical) members having a height that is substantially the same as the height of the separator 4. Moreover, an electrolyte solution 7 is stored in the container, and, in the container, only the ends of the current collectors 8 protrude from a liquid surface of the electrolyte solution 7. With the lithium secondary batteries of the Practical Examples, the polypropylene fillers 6 are provided as described above and, therefore, an amount of the electrolyte solution 7 used is reduced.

FIG. 2 is a breakdown perspective view of another lithium secondary battery (button battery) that is an example of the electricity storage device of the present invention, fabricated according to the Practical Examples. The lithium secondary battery illustrated in FIG. 2 comprises a cylindrical case 9, having a bottom and an open top face and housing sequentially from bottom to top an insulating packing 10, a positive electrode 11, a separator 12, a negative electrode 13 comprising the electrode including the silicon-containing carbon-based composite material, and a current collector 14. Axial centers of each of these components match. The insulating packing 10 is formed in a circular shape having a size that is substantially the same as that of the periphery of the case 9, and is attached to the case 9. The positive electrode 11 is formed in a substantially disc-like shape having a size that is slightly smaller than that of the inner circumference of the case 9. With this lithium secondary battery, the separator 12 is constituted by a pair of disc-like members having a size that is substantially the same as that of the inner circumference of the case 9, but the separator 12 may alternately be constituted by a single disc-like member. An electrolyte solution is impregnated into the separator 12. The negative electrode 13 is formed in a substantially disc-like shape having a size substantially the same as that of the positive electrode 11, and is disposed so as to be opposite the positive electrode 11 via the separator 12. The current collector 14 is formed in a substantially disc-like shape having a size substantially the same as that of the negative electrode 13, and is bonded to the negative electrode 13. The current collector 14 is constituted by copper foil, nickel mesh, metal mesh, or the like. With such a configuration, a lid-like sealing plate 15, having an open underside, with a size that is slightly larger than the case 9 is attached to the case 9, and the lithium secondary battery is formed.

The positive electrodes 2 and 11 in the lithium secondary batteries illustrated in FIGS. 1 and 2 are not particularly limited and, for example, can be constituted by positive electrode current collectors, positive electrode active materials, conductive materials, and the like. Examples of the positive electrode current collectors include aluminum and the like. Examples of the positive electrode active materials include TiS₂, MoS₃, NbSe₃, FeS, VS₂, VSe₂, and similar metal chalcogenides having a layered structure; and CoO₂, Cr₃O₅, TiO₂, CuO, V₃O₆, Mo₃O, V₂O₅(·P₂O₅), Mn₂O(·Li₂O), LiCoO₂, LiNiO₂, LiMn₂O₄, and similar metal oxides. Of these, preferable positive electrode active materials are LiCoO₂, LiNiO₂, LiMn₂O₄, and similar lithium complex oxides. A single positive electrode active material may be used or a combination of two or more types of positive electrode active materials can be used. Examples of the conductive materials are the same as those described above.

The electrolyte solutions included in the lithium secondary batteries illustrated in FIGS. 1 and 2 are not particularly limited, and commonly known electrolyte solutions can be used. For example, a non-aqueous lithium secondary battery can be manufactured by using a solution in which an electrolyte is dissolved in an organic solvent as the electrolyte solution. Examples of the electrolyte include LiPF₆, LiClO₄, LiBF₄, LiClF₄, LiAsF₆, LiSbF₆, LiAlO₄, LiAlCl₄, LiCl, LiI, and similar lithium salts. Examples of the organic solvent include carbonates (e.g. propylene carbonate, ethylene carbonate, diethyl carbonate), lactones (e.g. γ-butyrolactone), chained ethers (e.g. 1,2-dimethoxyethane, dimethylether, diethylether), cyclic ethers (e.g. tetrahydrofuran, 2-methyltetrahydrofuran, dioxolane, 4-methyldioxolane), sulfolanes (e.g. sulfolane), sulfoxides (e.g. dimethyl sulfoxide), nitriles (e.g. acetonitrile, propionitrile, benzonitrile), amides (e.g. N,N-dimethylformamide, N,N-dimethylacetamide), polyoxyalkylene glycols (e.g. diethyleneglycol), and similar aprotic solvents. A single organic solvent may be used or a mixed solvent comprising two or more types of organic solvents can be used. A concentration of the electrolyte per one liter of the electrolyte solution is, for example, about 0.3 to 5 moles, preferably about 0.5 to 3 moles, and more preferably about 0.8 to 1.5 moles.

The separators 4 and 12 in the lithium secondary batteries illustrated in FIGS. 1 and 2 are not particularly limited, and a commonly known separator can be used. Examples thereof include porous polypropylene nonwovens, porous polyethylene nonwovens, and other polyolefin-based porous films.

The battery of the present invention is not limited to the examples illustrated in FIGS. 1 and 2 and, for example, can be applied to various forms such as stacked, packed, button, gum, battery pack, and rectangular batteries. Utilizing the characteristics of light-weight, high capacity, and high energy density, the lithium secondary battery of the present invention is suitable for use as a power supply for video cameras, computers, word processors, portable stereos, cellular phones, and other mobile, small electronic devices.

### Examples

Hereinafter the electrode active material, electrode, and electricity storage device of the present invention will be described in further detail using Practical Examples. In the Practical Examples, X-ray diffraction, scanning electron microscope, X-ray photoelectron spectroscopy, and battery characteristics were evaluated as follows.

### X-ray diffraction

Device: RINT 2000 (manufactured by Rigaku Corporation)
X-ray generator: Target Cu
Tube voltage: 40 kV
Tube current: 40 mA
2θ=10-90
Divergence slit: 2/3°
Divergence height: 10 mm
Scattering slit: 2/3°
Receiving slit: 0.3 mm

### Scanning electron microscope

Device: JSM-5800LV (manufactured by JEOL Ltd.)
Energy dispersive X-ray analysis
Device: JED-2100 (manufactured by JEOL Ltd.)

### X-ray photoelectron spectroscopy

Device: ESCA-3400 (manufactured by Shimadzu Corporation)
X ray source: MgKα

### Evaluation of battery characteristics

Charge and discharge characteristics of the lithium secondary battery using the silicon-containing carbon-based composite material of the present invention were measured using an HJR-110mSM6 (manufactured by Hokuto Denko Corporation). Both charging and discharging were measured at a constant current of 0.1 C (37.2 mAh/g), which is 1/10 of 372 mAh/g, the theoretical capacity of graphite, per 1 g of the silicon-containing carbon-based composite material. Measuring of the charging was considered complete at the point when battery voltage declined to 0 V, and measuring of the discharging was considered complete at the point when battery voltage reached 3 V. The battery was allowed to sit in an open circuit state for 30 minutes when switching between charging and discharging. The charging and discharging processes were repeated under the conditions described above and the cycle characteristics thereof were evaluated. The charging capacity of the first charging is referred to as "initial charging capacity" (mAh/g) and the discharging capacity of the first discharging is referred to as "initial discharging capacity" (mAh/g). Initial charging and discharging efficiency (CE%) was expressed as a percentage (%) of the initial discharging capacity with respect to the initial charging capacity. A capacity maintenance ratio after the cycle test was expressed as a percentage (%) of the charging capacity after a certain cycle with respect to the initial charging capacity.

### Practical Example 1

### Preparation of the silicon-containing crosslinked particles

A solution comprising 30 g of polystyrene at a degree of polymerization of about 2,000 and 10 g of toluene ; and a silicone composition comprising 10.0 g of an organosiloxane expressed by the formula:

[(CH₃)₂CH₂=CHSiO]₃ SiC₆H₅

and 14.7 g of an organosiloxane expressed by the formula:

(CH₃)₂HSiO[(C₆H₅)₂SiO]₂Si(CH₃)₂H

were mixed to form a uniform solution. Next, the obtained solution was combined with a 1,3-divinyltetramethyl disiloxane platinum complex (included in an amount such that, in terms of weight units, 20 ppm of platinum metal was included with respect to the weight of the silicone composition) and 0.1 g of a 2-methyl-3-butyne-2-ol, and the components were stirred evenly at room temperature. Thereafter, the silicone composition was crosslinked by being put in a 110°C oven for 30 minutes. As a result, a gel-like substance having white turbitidy was obtained. This gel-like substance was heated under reduced pressure in order to remove the toluene, and a white solid product was obtained. Observation of a cross-section of the obtained solid under a scanning electron microscope (hereinafter referred to as "SEM") showed that the silicon-containing crosslinked particles were uniformly dispersed in the polystyrene.

### Preparation of the silicon-containing carbon-based composite material

20 g of the polystyrene containing the prepared silicon-containing crosslinked particles was placed into an SSA-S grade alumina crucible and baked for two hours at 600°C and then for one hour at 1000°C in a muffle furnace under a nitrogen atmosphere. After cooling, black particles were obtained at a 28% yield. SEM observation of the obtained black particles showed that the particles had a spherical form with an average diameter of about 2.2 µm. By subjecting the obtained black particles to X-ray photoelectron spectroscopy (hereinafter referred to as "XPS"), it was confirmed that these particles were a silicon-containing carbon-based composite material expressed by the average composition formula: C_{2.20}O_{0.40}Si₁₀₀. Furthermore, observation of the black particles under the X-ray diffraction pattern (CuKα) showed a broad distinct diffraction peak originating from the amorphous structure of the SiOC ceramic at 2θ of near 25° and a diffraction peak originating from the graphene structure at 2θ of near 44°.

### Fabrication of the negative electrode body

107.58 parts by weight of the silicon-containing carbon-based composite material prepared as described above and 6.94 parts by weight of ketjen black were mixed for 15 minutes in a mortar. Thereafter, 12.00 parts by weight of polyvinylidene fluoride was added and the components were further stirred for 15 minutes. Then, N-methyl-2-pyrrolidone was mixed in as a solvent in order to obtain a slurry-like mixture, which was then coated on a copper foil roll at a thickness of about 250 µm by means of a doctor blade method. Thereafter, the coated foil roll was dried under vacuum for not less than 12 hours at 85°C, and a negative electrode body having a thickness of about 30 µm was obtained.

### Fabrication and evaluation of the lithium-ion secondary battery

A lithium-ion secondary battery having the structure illustrated in FIG. 2 was fabricated. Metallic lithium was used as the counterelectrode; a polypropylene nonwoven was used as the separator; the negative electrode body described above was used as the negative electrode; and a mixed solvent comprising ethylene carbonate and diethyl carbonate at a volume ratio of 1:1, in which lithium hexafluorophosphate was dissolved at a ratio of 1 mol/L, was used as the electrolyte solution. Then, the battery characteristics of the lithium secondary battery were evaluated according to the evaluation methods of battery characteristics described above. The battery characteristics are shown in Table 1.

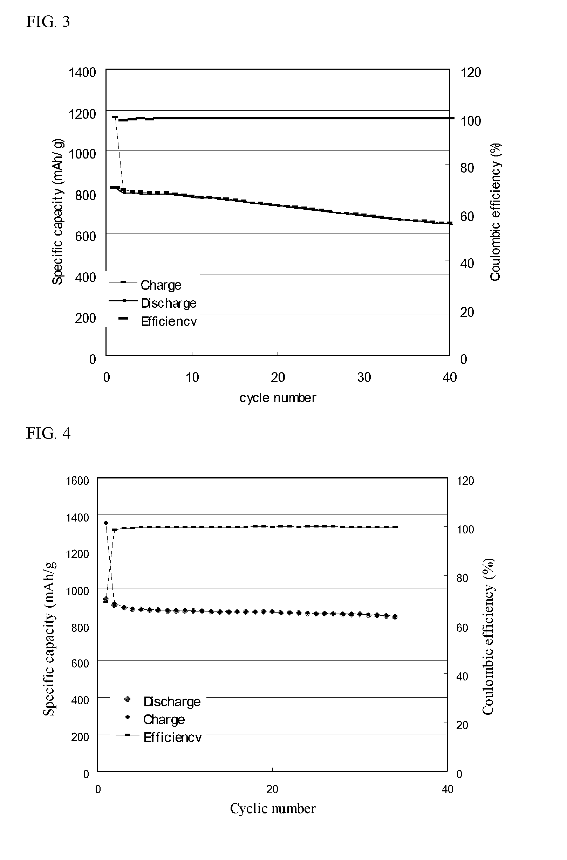

FIG. 3 is a chart showing charge and discharge cycle characteristics of the fabricated lithium-ion secondary battery. The chart shows the charging capacity (Charge: mAh/g) and discharging capacity (Discharge: mAh/g) of each cycle, and the charging and discharging efficiency at each cycle (Efficiency: A percentage (%) of the discharging capacity with respect to the charging capacity). The chart also shows that, aside from the initial charging capacity, the plotted points of the charging capacity and the discharging capacity overlapped, and aside from the initial cycle, values of the charging capacity and the discharging capacity at each cycle were substantially the same. Moreover, the chart also shows that, aside from the initial charging and discharging efficiency (CE(%)), the charging and discharging efficiency at each charging and discharging cycle was substantially constant.

### Practical Example 2

60 g of liquid paraffin having a density at 15°C of 0.87 g/ml and a viscosity at 40°C of about 60 mm²/s, and 5 g of tetramethyltetravinyl cyclotetrasiloxane; and a silicone composition comprising 22.4 g of an organopolysiloxane expressed by the formula:

(CH₃)₂HSiO[(C₆H₅)₂SiO]_{2.5}Si(CH₃)₂H

were mixed to form a uniform solution. Next, the obtained solution was combined with a 1,3-divinyltetramethyl disiloxane platinum complex (used in an amount such that, in terms of weight units, 10 ppm of platinum metal was included with respect to the weight of the silicone composition), and the components were stirred evenly at room temperature. Thereafter, the silicone composition was crosslinked by being put in a 120°C oven for 30 minutes. As a result, a solution having white turbitidy was obtained. The obtained solution was extracted with toluene, whereby silicon-containing crosslinked particles of a regular spherical shape with an average diameter of 2.0 µm were produced.

The obtained silicon-containing crosslinked particles were placed into an alumina crucible and baked for two hours at 600°C and then for one hour at 1000°C in a muffle furnace under a nitrogen atmosphere. After cooling, black particles were obtained at a 72% yield. Subjecting the obtained black particles to SEM observation and energy dispersive x-ray analysis (hereinafter referred to as "EDX") revealed that the black particles were constituted mainly of the SiOC component, had a spherical form, and had an average diameter of about 1.35 µm. Additionally, by subjecting the obtained black particles to XPS, it was confirmed that these spherical particles were a silicon-containing carbon-based composite material expressed by the average composition formula: C_{2.00}O_{0.79}Si_{1.00}. Observation of the obtained black particles under X-ray diffraction pattern (CuKα) in the XRD showed a broad distinct absorption peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 1, 107.58 parts by weight of the silicon-containing carbon-based composite material, 6.94 parts by weight of the ketjen black, and 12.00 parts by weight of the polyvinylidene fluoride were used. In Practical Example 2, other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium-ion secondary battery was fabricated using this negative electrode body, the same as in Practical Example 1, and evaluated. Results of the evaluation are shown in Table 1.

### Practical Example 3

A solution comprising 2.4 g of polystyrene at a degree of polymerization of about 2,000 and 3.0 g of toluene; and a silicone composition comprising 24 g of an organopolysiloxane expressed by the formula:

[(CH₂=CH)(CH₃)₂SiO_{1/2}]_{.25}(C₆H₅SiO_{3/2})_{.75}

2.4 g of an organopolysiloxane expressed by the formula:

(CH₃)₂HSiO[(C₆H₅)₂SiO]Si(CH₃)₂H

and 2.4 g of an organopolysiloxane expressed by the formula:

C₆H₅Si[OSi(CH₃)₂H]₃

were mixed to form a uniform solution. Next, the obtained solution was mixed with 0.01 g of a 1,3-divinyltetramethyl disiloxane platinum complex and 0.1 g of a methyl tris(1,1-dimethyl-2-propynoxy) silane, and the components were stirred evenly at room temperature. Thereafter, the silicone composition was crosslinked by being put in a 110°C oven for 30 minutes. As a result, a gel-like substance having white turbitidy was obtained. This gel-like substance was heated under reduced pressure in order to remove the toluene, and a white solid product was obtained. Observation of a cross-section of the obtained solid under a SEM showed that the silicon-containing crosslinked particles were uniformly dispersed in the polystyrene. The obtained solution was extracted with toluene, and silicon-containing crosslinked particles of a regular spherical shape with an average diameter of 2.5 µm were confirmed.

The polystyrene in which the obtained silicon-containing crosslinked particles were dispersed was placed into an alumina crucible and baked for two hours at 600°C and then for one hour at 1000°C in a muffle furnace under a nitrogen atmosphere. After cooling, black particles were obtained at a 35% yield. SEM observation of the obtained black particles showed that the particles had a spherical form with an average diameter of about 2.2 µm. Additionally, by subjecting the obtained black particles to XPS, it was confirmed that these spherical particles were a silicon-containing carbon-based composite material expressed by the average composition formula: C_{2.00}O_{0.79}Si_{1.00}. Moreover, observation of the obtained black particles under X-ray diffraction conditions (CuKα) in the XRD showed a broad distinct absorption peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 3, other than using 104.77 parts by weight of the silicon-containing carbon-based composite material prepared as described in this Practical Example, the negative electrode body was fabricated the same as in Practical Example 2. A lithium-ion secondary battery was fabricated using this negative electrode body, the same as in Practical Example 1, and evaluated. Results of the evaluation are shown in Table 1.

### Practical Example 4

A solution comprising 30 g of polystyrene at a degree of polymerization of about 2,000 and 20 g of toluene; 15.0 g of 1,4-divinylbenzene; and a silicone composition comprising 26.94 g of an organopolysiloxane expressed by the formula:

(HMe₂SiO_{1/2})_{0.6}(SiO_{3/2}Ph)_{0.4}

and 0.01 g of methyl tri(2-methyl-2-butynoxy) silane were mixed to form a uniform solution. Next, the obtained solution was combined with a 1,3-divinyltetramethyl disiloxane platinum complex (used in an amount such that, in terms of weight units, 20 ppm of platinum metal was included with respect to the weight of the silicone composition), and the components were stirred evenly at room temperature. Thereafter, the silicone composition was crosslinked by being put in a 150°C oven for 30 minutes. As a result, a gel-like substance having white turbitidy was obtained. This gel-like substance was heated under reduced pressure in order to remove the toluene, and a white solid product was obtained. Observation of a cross-section of the obtained solid under a SEM showed that the silicon-containing crosslinked particles were uniformly dispersed in the polystyrene.

The polystyrene in which the obtained silicon-containing crosslinked particles were dispersed was placed into an alumina crucible and baked for two hours at 600°C and then for one hour at 1000°C in a muffle furnace under a nitrogen atmosphere. After cooling, black particles were obtained at a 32% yield. SEM observation of the obtained black particles showed that the particles had a spherical form with an average diameter of about 1.50 µm. Additionally, by subjecting the obtained black particles to XPS, it was confirmed that these spherical particles were a silicon-containing carbon-based composite material expressed by the average composition formula: C_{3.20}O_{0.40}Si_{1.00}. Moreover, observation of the obtained black particles under X-ray diffraction conditions (CuKα) in the XRD showed a broad distinct diffraction peak originating from the amorphous structure of the SiOC ceramic at 2θ of near 20° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 4, other than using 104.77 parts by weight of the silicon-containing carbon-based composite material prepared as described in this Practical Example, the negative electrode body was fabricated the same as in Practical Example 2. A lithium-ion secondary battery was fabricated using this negative electrode body, the same as in Practical Example 1, and evaluated. Results of the evaluation are shown in Table 1.

### Practical Example 5

A solution comprising 10 g of polystyrene at a degree of polymerization of about 2,000 and 10 g of toluene; and a silicone composition comprising 5 g of an organosiloxane expressed by the formula:

[(CH₃)₂(CH₂CH)SiO]₃(C₆H₅)Si,

5 g of an organopolysiloxane expressed by the formula:

[(CH₃)₂(CH₂-CH)SiO]₂(C₆H₅)₂Si,

and 10 g of divinylbenzene were mixed to form a uniform solution. Following this, the solution was combined with 0.5 g of a dicumyl peroxide, and the components were thoroughly stirred at room temperature. The product was then heated in an oven at 180°C for 60 min with the polystyrene in a melting state in order to crosslink the silicone composition. Then, the product was cooled and, as a result a white solid product was obtained. Observation of a cross-section of the obtained solid under a SEM showed that the silicon-containing crosslinked particles were uniformly dispersed in the polystyrene.

The obtained white solid product was placed into an alumina crucible and baked for two hours at 600°C and then for one hour at 1000°C in a muffle furnace under a nitrogen atmosphere. After cooling, black particles were obtained at a 26% yield. SEM observation of the obtained black particles showed that the particles had a spherical form with an average diameter of about 9.50 µm. Additionally, by subjecting the obtained black particles to XPS, it was confirmed that these particles were a silicon-containing carbon-based composite material expressed by the average composition formula: C_{3.20}O_{0.40}Si_{1.00}. Moreover, observation of the obtained black particles under X-ray diffraction conditions (CuKα) in the XRD showed a broad distinct diffraction peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 5, other than using 104.77 parts by weight of the silicon-containing carbon-based composite material prepared as described in this Practical Example, the negative electrode body was fabricated the same as in Practical Example 2. A lithium-ion secondary battery was fabricated using this negative electrode body, the same as in Practical Example 1, and evaluated. Results of the evaluation are shown in Table 1.

### Practical Example 6

A solution comprising 10 g of polystyrene at a degree of polymerization of about 2,000 and 10 g of toluene; and 10.0 g of 1,1,3,3-tetramethyl-1,3-di(2-(3,4-epoxycyclohexyl)ethyl)disiloxane were mixed to form a uniform solution. Following this, the solution was combined with 2.2 g of a triethylenetetramine, and the components were thoroughly stirred at room temperature. The product was then heated under a nitrogen atmosphere in an oven at 180°C for 60 min with the polystyrene in a melting state in order to crosslink the 10.0 g of 1,1,3,3-tetramethyl-1,3-di(2-(3,4-epoxycyclohexyl)ethyl)disiloxane. Then, the product was cooled and, as a result a white solid product was obtained. Observation of a cross-section of the obtained solid under a SEM showed that the silicon-containing crosslinked particles were uniformly dispersed in the polystyrene. The obtained solution was extracted with toluene, and silicon-containing crosslinked particles of a regular spherical shape with an average diameter of 1.5 µm were confirmed.

25 g of the polystyrene in which the obtained silicon-containing crosslinked particles were dispersed and 25 g of coal tar pitch were placed into a Labo Plastomill and mixed at 150°C. Then, the mixed product was placed into an alumina crucible and baked for two hours at 600°C and then for one hour at 1000°C in a muffle furnace under a nitrogen atmosphere. After cooling, black particles were obtained at a 62% yield. Subjecting the obtained black particles to SEM and EDX observation revealed that these particles were a silicon-containing carbon-based composite material in which spherical particles constituted mainly of the SiOC component, and having an average diameter of about 1.2 µm, were dispersed in a continuous phase comprising mainly carbon. Moreover, observation of the obtained black particles under X-ray diffraction conditions (CuKα) in the XRD showed a broad distinct diffraction peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 6, other than using 104.77 parts by weight of the silicon-containing carbon-based composite material prepared as described in this Practical Example as the electrode active material, the negative electrode body was fabricated the same as in Practical Example 2. A lithium-ion secondary battery was fabricated using this negative electrode body, the same as in Practical Example 1, and evaluated. Results of the evaluation are shown in Table 1.

### Practical Example 7

A solution comprising 30 g of a phenolic novolac resin (BRG558, manufactured by Showa Highpolymer Company, Ltd.) and 20 g of a methyl isobutyl ketone; and a silicone composition comprising 5 g of tetramethyltetravinylcyclotetrasiloxane and 22.4 g of an organopolysiloxane expressed by the formula:

(CH₃)₂HSiO[(C₆H₅)₂SiO]_{2.5}Si(CH₃)₂H

were mixed to form a uniform solution. Next, the obtained solution was combined with a 1,3-divinyltetramethyl disiloxane platinum complex (used in an amount such that, in terms of weight units, 10 ppm of platinum metal was included with respect to the weight of the silicone composition), and the components were stirred evenly at room temperature. Thereafter, the silicone composition was crosslinked by putting the obtained mixture in a 100°C oven for 30 minutes. As a result, a gel-like substance having white turbitidy was obtained. This gel-like substance was heated under reduced pressure in order to remove the methyl isobutyl ketone, and a solid product was obtained. Observation of a cross-section of the obtained solid product under a SEM showed that the silicon-containing crosslinked particles were uniformly dispersed in the phenolic novolac resin.

The phenolic novolac resin in which the obtained silicon-containing crosslinked particles were dispersed was placed into an alumina crucible and baked for two hours at 600°C and then for one hour at 1000°C in a muffle furnace under a nitrogen atmosphere. After cooling, a black solid product was obtained at a 52% yield. The obtained black solid product was crushed using a pulverizer having a clearance set to 20 µm. Thereby, black particles having an average diameter of about 15 µm were obtained. Subjecting the obtained black particles to SEM and EDX observation revealed that these particles were a silicon-containing carbon-based composite material in which spherical particles constituted mainly of the SiOC component, and having an average diameter of about 0.8 µm, were dispersed in a continuous phase comprising mainly carbon. Moreover, observation of the obtained black particles under X-ray diffraction conditions (CuKα) in the XRD showed a broad distinct diffraction peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 7, other than using 104.77 parts by weight of the silicon-containing carbon-based composite material prepared as described in this Practical Example as the electrode active material, the negative electrode body was fabricated the same as in Practical Example 2. A lithium-ion secondary battery was fabricated using this negative electrode body, the same as in Practical Example 1, and evaluated. Results of the evaluation are shown in Table 2.

### Practical Example 8

38 g of a coal tar pitch having a softening point of 120°C; 42.3 g of a toluene solution comprising 75 wt.% of an organopolysiloxane expressed by the average unit formula:

[(CH₂=CH)(CH₃)₂SiO_{1/2}]_{0.25}(C₆H₅SiO_{3/2})_{0.75};

and 6.3 g of 1,4-bis(dimethylsilyl)benzene were mixed to form a uniform solution. Next, the obtained solution was combined with a 1,3-divinyltetramethyl disiloxane platinum complex (used in an amount such that, in terms of weight units, 10 ppm of platinum metal was included with respect to the weight of the silicone composition) and 0.1 g of 1-ethynyl-1-cyclohexanol, and the components were stirred evenly at room temperature. Thereafter, the silicone composition was crosslinked by being put in a 150°C oven for 60 minutes. Observation of a cross-section of the obtained solid product under a SEM showed that the silicon-containing crosslinked particles were uniformly dispersed in the coal tar pitch.

The coal tar pitch in which the obtained silicon-containing crosslinked particles were dispersed was placed into an alumina crucible and baked for two hours at 600°C and then for one hour at 1000°C in a muffle furnace under a nitrogen atmosphere. After cooling, a black solid product was obtained at a 72% yield. The obtained black solid product was crushed using a pulverizer having a clearance set to 20 µm. Thereby, black particles having an average diameter of about 15 µm were obtained. Subjecting the obtained black particles to SEM and EDX observation revealed that the black particles were a silicon-containing carbon-based composite material in which spherical particles constituted mainly of the SiOC component, and having an average diameter of about 5.35 µm, were dispersed in a continuous phase comprising mainly carbon. Moreover, observation of the obtained black particles under X-ray diffraction conditions (CuKα) in the XRD showed a broad distinct diffraction peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 8, other than using 104.77 parts by weight of the silicon-containing carbon-based composite material prepared as described in this Practical Example, the negative electrode body was fabricated the same as in Practical Example 2. A lithium-ion secondary battery was fabricated using this negative electrode body, the same as in Practical Example 1, and evaluated. Results of the evaluation are shown in Table 2.

### Practical Example 9

A solution comprising 25 g of polystyrene at a degree of polymerization of about 2,000 and 25 g of toluene; 15.49 g of DVB570 (manufactured by Nippon Steel Chemical Co., Ltd.; Main components: divinylbenzene and vinyl ethylbenzene; proportion of divinylbenzene included in the main components: 60 wt.%); and 9.51 g of a methyl hydrogen siloxane copolymer capped at both molecular terminals with trimethylsiloxy groups (viscosity: 20 mPa·s; silicon-bonded hydrogen atoms content: 1.58 wt.%; included in an amount such that one mole of the silicon-bonded hydrogen atoms in the copolymer is included per one mole of vinyl groups in the DVB570) were thoroughly mixed in a Labo Plastomill. Next, the obtained mixture was combined with a 1,3-divinyltetramethyl disiloxane platinum complex (used in an amount such that, in terms of weight units, 20 ppm of platinum metal was included with respect to the total weight of the DVB570 and the methyl hydrogen siloxane copolymer), and the components were stirred until uniformly mixed at 80°C. Thereafter, the mixture was allowed to sit for 10 minutes at 150°C and then was cooled. Thereby, a white solid product was obtained.

The obtained solid product was placed into an SSA-S grade alumina crucible and baked for two hours at 600°C and then for one hour at 1000°C in a muffle furnace under a nitrogen atmosphere. After cooling, black particles were obtained at a 32% yield. Agglomerates of the obtained black particles were crushed using a pulverizer having a clearance set to 10 µm. Thereby, spherical black particles having an average diameter of about 3.5 µm were obtained. Additionally, by subjecting the obtained black particles to XPS, it was confirmed that these particles were a silicon-containing carbon-based composite material expressed by the average composition formula: C_{3.67}O_{1.07}Si_{1.00}. Moreover, observation of the obtained spherical particles under X-ray diffraction conditions (CuKα) in the XRD showed a broad diffraction peak originating from the amorphous structure of the SiOC ceramic at 2θ of near 20° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 9, other than using 104.77 parts by weight of the silicon-containing carbon-based composite material prepared as described in this Practical Example, the negative electrode body was fabricated the same as in Practical Example 2. A lithium-ion secondary battery was fabricated using this negative electrode body, the same as in Practical Example 1, and evaluated. Results of the evaluation are shown in Table 2.

### Practical Example 10

100 g of a dimethylpolysiloxane capped at both molecular terminals with trimethylsiloxy groups (viscosity: 1,000 mPa·s); and a silicone composition comprising 43 g of a methylhydrogenpolysiloxane capped at both molecular terminals with trimethylsiloxy groups (viscosity: 10 mPa·s; content of silicon-bonded hydrogen atoms: 1.6 wt.%), and 50 g of a 1,3-divinyltetramethyl disiloxane were mixed to form a uniform solution. Next, the obtained solution was combined with a 1,3-divinyltetramethyl disiloxane platinum complex (used in an amount such that, in terms of weight units, 20 ppm of platinum metal was included with respect to the weight of the silicone composition was 20 ppm), and the components were stirred evenly at room temperature. Thereafter, the silicone composition was crosslinked by being left at rest for 60 minutes at 80°C, and thereafter 60 minutes at 120°C. As a result, a gel-like mixture having white turbitidy was obtained. Observation of the obtained mixture under a stereoscopic microscope showed that the composition consisted of silicon-containing crosslinked particles uniformly dispersed in oil. The mixture was extracted with toluene, whereby silicon-containing crosslinked particles of a regular spherical shape with an average diameter of 1.2 µm were produced.

30 g of the obtained silicon-containing crosslinked particles and 30 g of coal tar pitch powder were placed into a ball mill and mixed. Then, the mixed product was placed into an alumina crucible and baked for two hours at 600°C and then for one hour at 1000°C in a muffle furnace under a nitrogen atmosphere. After cooling, black particles were obtained at an 80% yield. Agglomerates of the obtained black particles were crushed using a pulverizer having a clearance set to 20 µm. Thereby, black particles having an average diameter of about 15 µm were obtained. Subjecting the obtained black particles to SEM and EDX observation revealed that the black particles were particles comprising mainly carbon were surface coated with spherical particles constituted mainly of the SiOC component, and having an average diameter of about 1.15 µm. Additionally, by subjecting the obtained black particles to XPS, it was confirmed that these particles were a silicon-containing carbon-based composite material expressed by the average composition formula: Si_{1.00}O_{0.42}C_{1.45}. Moreover, observation of the obtained black particles under X-ray diffraction conditions (CuKα) in the XRD showed a broad distinct absorption peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 10, other than using 104.77 parts by weight of the silicon-containing carbon-based composite material prepared as described in this Practical Example as the electrode active material, the negative electrode body was fabricated the same as in Practical Example 2. A lithium-ion secondary battery was fabricated using this negative electrode body, the same as in Practical Example 1, and evaluated. Results of the evaluation are shown in Table 2.

### Practical Example 11

5 g of the silicon-containing carbon-based composite material prepared in Practical Example 2 and 5 g of coal tar pitch were mixed. Then, the mixture was baked for one hour at 1000°C. Thereby black particles were obtained at a 72% yield. The obtained black particles were crushed using a pulverizer having a clearance set to 20 µm. Thereby, black particles having an average diameter of about 15 µm were obtained. Subjecting the obtained black particles to SEM and EDX observation revealed that these particles were a silicon-containing carbon-based composite material in which spherical particles constituted mainly of the SiOC component, and having an average diameter of about 1.35 µm, were dispersed in a continuous phase comprising mainly carbon. Subjecting the obtained black particles to XPS showed that these particles were a silicon-containing carbon-based composite material expressed by the average composition formula: Si_{1.00}O_{0.42}C_{11.45}. Moreover, observation of the obtained compound particles under X-ray diffraction conditions (CuKα) in the XRD showed a broad distinct absorption peak originating from the amorphous structure of the SiOC ceramic at 2θ of near 25° and a diffraction peak originating from the graphene structure at 2θ near 44°.

### Fabrication of the negative electrode body and lithium-ion secondary battery, and evaluation of the battery

In Practical Example 2, 104.77 parts by weight of the silicon-containing carbon-based composite material was used. In Practical Example 11, other than using 104.77 parts by weight of the silicon-containing carbon-based composite material prepared as described in this Practical Example, the negative electrode body was fabricated the same as in Practical Example 2. A lithium-ion secondary battery was fabricated using this negative electrode body, the same as in Practical Example 1, and evaluated. Results of the evaluation are shown in Table 2.

FIG. 4 is a chart showing charge and discharge cycle characteristics of the fabricated lithium-ion secondary battery. The chart shows the charging capacity (Charge: mAh/g) and discharging capacity (Discharge: mAh/g) of each cycle, and the charging and discharging efficiency at each cycle (Efficiency: A percentage (%) of the discharging capacity with respect to the charging capacity). The chart also shows that, aside from the initial charging capacity, the plotted points of the charging capacity and the discharging capacity overlapped, and aside from the initial cycle, values of the charging capacity and the discharging capacity at each cycle were substantially the same. Moreover, the chart also shows that, aside from the initial charging and discharging efficiency (CE(%)), the charging and discharging efficiency at each charging and discharging cycle was substantially constant.

### Comparative Example 1

A solution comprising 30 g of polystyrene and 20 g of toluene at a degree of polymerization of about 2,000; and a silicone composition comprising 9.0 g of a 1,3,5,7-tetramethyl-1,3,5,7-tetravinylcyclotetrasiloxane (viscosity: 3.1 mPa·s) and 9.5 g of a methyl hydrogen siloxane polymer capped at both molecular terminals with trimethylsiloxy groups, (viscosity: 20 mPa·s; silicon-bonded hydrogen atoms content: 1.58 wt.%) were mixed. Next, the obtained solution was combined with a 1,3-divinyltetramethyl disiloxane platinum complex (used in an amount such that, in terms of weight units, 20 ppm of platinum metal was included with respect to the weight of the silicone composition), and stirred at room temperature. However, a uniform phase was not obtained. The obtained silicone composition was crosslinked by being put in a 110°C oven for 30 minutes, and then being put in a 120°C oven for 60 minutes immediately after mixing. As a result, a two-layer gel-like substance having a crosslinked silicone layer and an oil layer was obtained. The obtained gel-like substance was observed under a stereoscopic microscope, but the observation did not reveal the presence of spherical silicon-containing crosslinked particles.

The obtained gel-like substance was placed into an SSA-S grade alumina crucible and baked for two hours at 600°C and then for one hour at 1000°C in a muffle furnace under a nitrogen atmosphere. After cooling, a black solid product was obtained at a 72% yield. After cooling, the obtained black solid product was crushed using a pulverizer having a clearance set to 20 µm. Thereby, particles having an average diameter of about 15 µm were obtained. Additionally, by subjecting the obtained particles to XPS, it was confirmed that these particles were a silicon-containing carbon-based composite material expressed by the average composition formula: C_{1.71}O_{1.83}Si_{1.00}.

### Fabrication of the negative electrode body and lithium-ion secondary battery, and evaluation of the battery

In Practical Example 2, 104.77 parts by weight of the silicon-containing carbon-based composite material was used. In Comparative Example 1, other than using 104.77 parts by weight of the silicon-containing carbon-based composite material prepared as described in this Comparative Example as the electrode active material, the negative electrode body was fabricated the same as in Practical Example 1. A lithium-ion secondary battery was fabricated using this negative electrode body, the same as in Practical Example 2, and evaluated. The battery characteristics are shown in Table 2.

**Table 1**

| | Practical Example 1 | Practical Example 2 | Practical Example 3 | Practical Example 4 | Practical Example 5 | Practical Example 6 |
|---|---|---|---|---|---|---|
| Initial charging capacity (mAh/g) | 1160 | 1096 | 1069 | 1183 | 1021 | 935 |
| Initial discharging capacity (mAh/g) | 820 | 783 | 727 | 863 | 746 | 673 |
| CE% | 71 | 71 | 68 | 73 | 73 | 72 |
| Capacity maintenance ratio (%) | | | | | | |
| After 10 cycles | 94 | 83 | 84 | 90 | 87 | 92 |
| After 20 cycles | 89 | 80 | 78 | 85 | 81 | 81 |
| After 40 cycles | 78 | 80 | 75 | 70 | 74 | 73 |

**Table 2**

| | Practical Example 7 | Practical Example 8 | Practical Example 9 | Practical Example 10 | Practical Example 11 | Comparative Example 1 |
|---|---|---|---|---|---|---|
| Initial charging capacity | 912 | 1013 | 1071 | 977 | 1355 | 1363 |
| (mAh/g) | | | | | | |
| Initial discharging capacity (mAh/g) | 571 | 746 | 757 | 743 | 939 | 674 |
| CE% | 63 | 74 | 70 | 76 | 70 | 49 |
| Capacity maintenance ratio (%) | | | | | | |
| After 10 cycles | 95 | 95 | 83 | 83 | 93 | - |
| After 20 cycles | 94 | 89 | - | 78 | 92 | 42 |
| After 40 cycles | 92 | 80 | - | 72 | - | - |

### Practical Example 12

The black particles prepared in Practical Example 2 were subjected to thermal chemical vapor deposition for one hour at 1,000°C using a batch-type rotary kiln (inside diameter: Approx. ϕ300 mm × 600 mm), under a stream of a methane-argon gas mixture. An amount of carbon laminated on the surface of the obtained silicon-containing carbon-based composite material particle was 17 wt.%. The obtained silicon-containing carbon-based composite material was used to fabricate a negative electrode body, the same as in Practical Example 2. A lithium-ion secondary battery was fabricated using the fabricated negative electrode body, the same as in Practical Example 1, and evaluated. The battery characteristics are shown in Table 3.

**Table 3**

| | Practical Example 12 |
|---|---|
| Initial charging capacity (mAh/g) | 1322 |
| Initial discharging capacity | 965 |
| (mAh/g) | |
| CE% | 73 |
| Capacity maintenance ratio (%) | |
| After 10 cycles | 97 |
| After 20 cycles | 95 |
| After 40 cycles | 94 |

### INDUSTRIAL APPLICABILITY

The electrode active material of the present invention can be suitably used as an electrode active material for electricity storage devices, especially for lithium secondary batteries. Additionally, an electrode including the electrode active material of the present invention, particularly a lithium secondary battery provided with a negative electrode, has excellent reversible capacity and charge and discharge cycle characteristics, and has little electrical potential loss when lithium is discharged.

## Claims

1. An electrode active material comprising a silicon-containing carbon-based composite material obtained by preparing a uniform phase comprising at least (A) a crosslinkable composition that includes a silicon-containing compound having a crosslinkable group, and (B) a liquid or melt that does not participate in the crosslinking reaction of the crosslinkable composition; then crosslinking the component (A), causing phase-separation from the component (B) for obtaining silicon-containing crosslinked particles or a dispersion wherein the silicon-containing crosslinked particles are dispersed in the component (B); and then baking the silicon-containing crosslinked particles or the dispersion in an inert gas or in a vacuum at 300 to 1,500°C.

2. The electrode active material of claim 1, wherein the silicon-containing compound having a crosslinkable group is a siloxane, a silane, a silazane, a carbosilane, or a copolymer thereof.

3. The electrode active material of claim 1, wherein the silicon-containing compound having a crosslinkable group is a siloxane expressed by the following average unit formula:
(R¹₃SiO_{1/2})ₐ(R¹₂SiO_{2/2})_{b}(R¹SiO_{3/2})_{c}(SiO_{4/2})_{d}
wherein R¹ are the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; "a", "b", "c", and "d" are numbers that are greater than or equal to 0 and less than or equal to 1, and that satisfy a+b+c+d=1; however, "a", "b", and "c" cannot be 0 at the same time.

4. The electrode active material of claim 1, wherein the component (A) is crosslinked by means of an addition reaction, a condensation reaction, a ring-opening reaction, or a radical reaction.

5. The electrode active material of claim 1, wherein the component (A) comprises a silicon-containing compound having aliphatic carbon-carbon unsaturated bonds, a compound having silicon-bonded hydrogen atoms, and a hydrosilylation-reaction catalyst.

6. The electrode active material of claim 1, wherein the component (A) comprises a silicon-free organic compound having aliphatic carbon-carbon unsaturated bonds, a compound having silicon-bonded hydrogen atoms, and a hydrosilylation-reaction catalyst.

7. The electrode active material of claim 1, wherein the component (A) comprises a silicon-containing compound having silanol groups, a compound having silicon-bonded hydrogen atoms, and a condensation-reaction catalyst.

8. The electrode active material of claim 1, wherein the component (A) comprises a silicon-containing compound having aliphatic carbon-carbon unsaturated bonds and a radical initiator.

9. The electrode active material of claim 1, wherein the component (A) comprises a silicon-containing compound having epoxy group-containing organic groups and an crosslinking agent for epoxy resin.

10. The electrode active material of claim 1, wherein the component (B) is a silicone oil or a silicon-free organic oil.

11. The electrode active material of claim 1, wherein the component (B) is selected from a polyethylene, polypropylene, polystyrene, polymethyl methacrylate, AS resin, ABS resin, polyvinyl chloride, polyacetal, polycarbonate, polyester, paraffin resin, phenolic resin, epoxy resin, urea resin, melamine resin, fluoro resin, imide resin, urethane resin, furan resin, and a mixture thereof.

12. The electrode active material of claim 1, wherein proportions of the component (A) and the component (B) are such that a weight ratio A:B ranges from 80:20 to 0.1:99.9.

13. The electrode active material of claim 1, wherein the silicon-containing crosslinked particles have an average diameter of 5 nm to 50 µm.

14. The electrode active material of claim 1, wherein the silicon-containing carbon-based composite material is obtained by baking a compound comprising the silicon-containing crosslinked particles and (C) carbon or an organic material that is carbonized by heating.

15. The electrode active material of claim 1, wherein the silicon-containing carbon-based composite material is carbon surface-coated.

16. The electrode active material of claim 15, wherein the silicon-containing carbon-based composite material is carbon surface-coated by thermal chemical vapor deposition.

17. The electrode active material of claim 15, wherein the silicon-containing carbon-based composite material is carbon surface-coated by a process comprising mixing the silicon-containing carbon-based composite material with carbon or an organic material that is carbonized by heating, and baking the obtained mixture in an inert gas or in a vacuum at 300 to 1,500°C.

18. An electrode comprising the electrode active material of any one of claims 1 to 15.

19. An electricity storage device comprising the electrode of claim 16.

20. The electricity storage device of claim 17, which is a lithium secondary battery.
